# EUROPÄISCHE PATENTSCHRIFT

(11) **EP 3 523 347 B1**
(45) Veröffentlichungstag und Bekanntmachung des Hinweises auf die Patenterteilung: **18.11.2020**
(21) Anmeldenummer: 17772743.5
(22) Anmeldetag: 02.10.2017
(51) Int. Cl.: C08G 18/79, C08K 5/00, C08G 18/02, C08G 18/18, C09D 175/04

(54) **FARBSTABILE HÄRTERZUSAMMENSETZUNGEN ENTHALTEND POLYISOCYANATE (CYCLO)ALIPHATISCHER DIISOCYANATE**
COLOUR STABLE CURING AGENT COMPOSITIONS CONTAINING POLYISOCYANATES OF (CYCLO)ALIPHATIC DIISOCYANATES
COMPOSITIONS DE DURCISSEUR DE COULEUR STABLE COMPRENANT DU POLYISOCYANATE DE DIISOCYANATES (CYCLO)ALIPHATIQUES

(30) Priorität: 07.10.2016 EP 16192847
(43) Veröffentlichungstag der Anmeldung: 14.08.2019
(73) Patentinhaber: BASF SE, 67056 Ludwigshafen am Rhein (DE)
(72) Erfinder: SCHAEFER, Harald, 67056 Ludwigshafen (DE); FLOJHAR, Daniel, 67056 Ludwigshafen (DE); SCHEIDEL, Jens, 67056 Ludwigshafen (DE); GENGER, Thomas, 67056 Ludwigshafen (DE); KRONER, Matthias, 67056 Ludwigshafen (DE); EMMERLING, Sebastian, 67056 Ludwigshafen (DE); ARENS, Guillermo, 67056 Ludwigshafen (DE)
(74) Vertreter: BASF IP Association
(86) Internationale Anmeldenummer: PCT/EP2017/074934
(87) Internationale Veröffentlichungsnummer: WO 2018/065344

(56) Entgegenhaltungen:
- WO-A2-2005/089085
- US-A1- 2011 059 251

## Beschreibung

Die vorliegende Erfindung betrifft neue farbdriftstabile Zusammensetzungen enthaltend Polyisocyanate von (cyclo)aliphatischen Diisocyanaten.

US 6376584 B1 beschreibt verschiedene Stabilisatoren zur Verwendung in Polyurethanzusammensetzungen, in denen Polyisocyanate mit Polyolen in Gegenwart von Dibutylzinndilaurat umgesetzt werden.

Nicht offenbart wird die Stabilisierungsproblematik, die erwächst, wenn man Polyisocyanatzusammensetzungen mit einem Katalysator vermischt und lagert.

US 7122588 B2 beschreibt Lacke, u.a. Polyurethanlacke, die mit Estern der hypophosphorigen Säure zur Verbesserung der Langlebigkeit und gegen Verfärbung stabilisiert sind.

Nicht offenbart wird die Stabilisierungsproblematik, die erwächst, wenn man Polyisocyanatzusammensetzungen mit einem Katalysator vermischt und lagert. Zudem ist die dort beschriebene Stabilisierung noch nicht ausreichend, so dass weiterhin Bedarf an einer verbesserten Stabilisierung besteht.

DE 19630903 beschreibt die Stabilisierung von Isocyanaten mit Hilfe von verschiedenen Phosphorverbindungen und sterisch gehinderten Phenolen.

Nicht beschrieben wird jeweils die Anwesenheit von Katalysatoren für die Reaktion zwischen Isocyanatgruppen und dagegen reaktive Gruppen.

WO 2005/089085 beschreibt Polyisocyanatzusammensetzungen als Härter für 2K-Polyurethanlacke, die neben einem Katalysator für die Reaktion zwischen Isocyanatgruppen und dagegen reaktiven Gruppen eine Stabilisatormischung enthält, ausgewählt aus sterisch gehinderten Phenolen und sekundären Arylaminen sowie Trialkyl-/Arylphosphiten. Explizit offenbart wird in den Beispielen eine Polyisocyanatzusammensetzungen, das Isocyanurat Tolonate HDT, mit Dibutylzinndilaurat als Katalysator in Butylacetat/Methylamylketon/Xylol 1:1:0,5.
Als sterisch gehinderte Phenole genannt sind 2,4-Dimethyl-6-butyl-phenol, 4,4'-Methylen-bis-(2,6-di-tert.-butylphenol), 2,6-Di-tert.-butyl-N,N'-dimethylamino-p-cresol, butyliertes Hydroxyanisol, 2,6-Di-tert.-butylphenol, 2,4,6-Tri-tert.-butyl-phenol, 2-Tert.-butylphenol, 2,6-Di-isopropyl-phenol, 2-Methyl-6-tert.-butyl-phenol, 2,4-Dimethyl-6-tert.-butyl-phenol, 4-(N, N-di-methyl-amino-methyl)-2,8-di-tert.-butyl-phenol, 4-Ethyl-2,6-di-tert.-butyl-phenol. In den Beispielen wird durchgängig BHT (3,5-Bis-tert.-butyl-4-hydroxy-toluol) in Kombination mit aliphatischen Trialkylphosphiten eingesetzt.

Die in den Patentschriften WO 2008/116893, WO 2008/116894, WO 2008/116895 beschriebenen Produktmischungen enthalten Polyisocyanat, Lewis-Säure, sekundäres Antioxidanz wie Thioether (WO 2008/116893), Phosphonit (WO 2008/116895) oder Phosphonat (WO 2008/116894), und optional sterisch gehindertes Phenol, saure Stabilisatoren und lacktypische Additive.

Die WO 2013/060614 beschreibt analog Polyisocyanatzusammensetzungen, enthaltend Polyisocyanat, Lewis-saure organische Metallverbindung, die die Umsetzung von Isocyanatgruppen mit gegenüber Isocyanat reaktiven Gruppen zu beschleunigen vermag, eine Brønsted-Säure mit einem pKs-Wert kleiner 4, sterisch gehindertes Phenol, Lösungsmittel und gegebenenfalls lacktypische Additive.

In allen der vorliegenden Patentanmeldungen ist die Verbesserung der Farbdriftstabilität bei Lagerung von Polyisocyanaten in Gegenwart von Lewis-Säure(n) und Lösungsmittel(n) nicht ausreichend gut.

DE 10 2008 060454 A1 der BASF Coatings beschreibt im Anspruch 1 Beschichtungsmittel, enthaltend (a) hydroxygruppenhaltige Verbindung (A), (b) mindestens eine gesättigte Verbindung (B) mit freien und/oder blockierten Isocyanatgruppen, die zumindest teilweise hydrolysierbare Silangruppen enthält, und (c) mindestens einen Katalysator (D) für die Vernetzung von Silangruppen, dadurch gekennzeichnet, dass das Beschichtungsmittel als hydroxygruppenhaltige Verbindung (A) mindestens einen hyperverzweigten, dendritischen hydroxyfunktionellen Polyester enthält, bei dem im Mittel mindestens eine Hydroxyfunktion des Polyesters mit mindestens einer Säure ausgewählt aus der Gruppe der isomeren C8- bis C9-Monocarbonsäuren verestert ist.
Im Anspruch 9 werden Beschichtungsmittel beschrieben, dadurch gekennzeichnet, dass der Katalysator phosphorhaltig ist und/oder dass Katalysatoren (D) ausgewählt sind aus der Gruppe der substituierten Phosphonsäurediester und/oder Diphosphonsäurediester, der substituierten Phosphorsäuremonoester und/oder Phosphorsäurediester, vorzugsweise aus der Gruppe, bestehend aus acyclischen Phosphorsäurediestern und/oder cyclischen Phosphorsäurediestern, und/oder der entsprechenden Aminblockierten Phosphorsäureester. Als Beispiel für einen blockierten Phosphorsäureester wird Nacure® 4167 genannt. Es wird gemäß Tabelle 2 der mit Polyisocyanat reaktiven Zusammensetzung zugefügt. Die Katalysatoren für die Silan-Vernetzung werden vorzugsweise in Anteilen von 0,01 bis 20 Gew.-%, besonders bevorzugt in Anteilen von 0,1 bis 10 Gew.-%, bezogen auf die nicht flüchtigen Bestandteile des erfindungsgemäßen Beschichtungsmittels, eingesetzt. In den Beispielen sind Mengen Einsatzmenge von >3,3 % Nacure® 4167 pro modifiziertes Polyisocyanat, entsprechend >1,1% reines Amin*Phosphat pro modifiziertes Polyisocyanat beschrieben. Die Lacke zeichnen sich durch u.a. gute Appearance, gute Welligkeit, und gute Kratzfestigkeit aus.

Der Einsatz Amin-blockierter Phosphate oder Amin-blockierter Phosphonate zur Stabilisierung von Isocyanat-Zusammensetzungen gegen Farbdrift in Anwesenheit von Lewis-Säure, insbesondere in Abwesenheit von Silanverbindungen wird nicht beschrieben. Die Mengen Amin-blockierter Phosphate oder Amin-blockierter Phosphonate sind signifikant höher als die in dieser Anmeldung zur Farbdriftstabilisierung verwendeten.

DE 3328661 beschreibt den Einsatz von Ammoniumsalzen aus mono- oder polyfunktionellen, primären, sekundären und/oder tertiären Aminen mit alkylierend wirkenden Estern von Säuren des Phosphors in einem Äquivalentverhältnis von 1:1 als latente, wärmeaktivierbare Katalysatoren für die Umsetzung aromatischer Polyisocyanate mit Polyolen für Klebstoffe und Gießelastomere. Katalysatorbeispiel 3 enthält Triethylamin * Dibutylphosphat. Im Anwendungsbeispiel 1 wird dieses in 2 % bezogen auf Polyisocyanat eingesetzt.

Die Aufgabe der vorliegenden Erfindung bestand darin, weitere lagerstabile Polyisocyanatzusammensetzungen bereitzustellen, die bereits einen Katalysator für die Reaktion zwischen Isocyanatgruppen und mit diesen reaktive Gruppen enthalten und farbstabil sind, und deren Stabilisierungswirkung besser als der Stand der Technik ist. Die stabilisierende Wirkung sollte unabhängig von der Herkunft des monomeren Isocyanats sein. Des Weiteren sollten das Additiv keine negativen Effekte in Kombination mit Lewis-Säuren aufweisen
Die Aufgabe wurde gelöst durch Polyisocyanatzusammensetzungen, enthaltend
- (A) mindestens ein Polyisocyanat, erhältlich durch Umsetzung mindestens eines monomeren Isocyanats,
- (B) mindestens ein Salz in einer Menge von 10 bis 300 Gew.ppm bezogen auf Komponente (A) bestehend aus einer (B1) phosphorhaltigen aciden Verbindung und (B2) einem offenkettigen trisubstituierten Amin,
- (C) mindestens ein sterisch gehindertes Phenol,
- (D) optional mindestens ein weiteres (sekundäres) Antioxidanz,
- (E) mindestens eine Lewis-saure organische Metallverbindung, die die Umsetzung von Isocyanatgruppen mit gegenüber Isocyanat reaktiven Gruppen zu beschleunigen vermag,
- (F) mindestens ein Lösungsmittel,
- (G) gegebenenfalls andere lacktypische Additive,

Derartige Polyisocyanatzusammensetzungen weisen eine gute Farbstabilität über den zeitlichen Verlauf in einer Lagerung auf (geringer "Farbdrift") und können mit Zusammensetzungen, die gegenüber Isocyanat reaktive Gruppen enthalten, in Polyurethanlacken umgesetzt werden.

Die eingesetzten monomeren Isocyanate können aromatisch, aliphatisch oder cycloaliphatisch sein, bevorzugt aliphatisch oder cycloaliphatisch, was in dieser Schrift kurz als (cyclo)aliphatisch bezeichnet wird, besonders bevorzugt sind aliphatische Isocyanate.

Aromatische Isocyanate sind solche, die mindestens ein aromatisches Ringsystem enthalten, also sowohl rein aromatische wie auch araliphatische Verbindungen.

Cycloaliphatische Isocyanate sind solche, die mindestens ein cycloaliphatisches Ringsystem enthalten.

Aliphatische Isocyanate sind solche, die ausschließlich gerade oder verzweigte Ketten enthalten, also acyclische Verbindungen.

Bei den monomeren Isocyanaten handelt es sich bevorzugt um Diisocyanate, die genau zwei Isocyanatgruppen tragen. Es kann sich aber prinzipiell auch um Monoisocyanate mit einer Isocyanatgruppe handeln.

Es kommen prinzipiell auch höhere Isocyanate mit im Mittel mehr als 2 Isocyanatgruppen in Betracht. Dafür eignen sich beispielsweise Triisocyanate wie Triisocyanatononan, 2'-Isocyanatoethyl-(2,6-diisocyanatohexanoat), 2,4,6-Triisocyanatotoluol, Triphenylmethantriisocyanat oder 2,4,4'-Triisocyanatodiphenylether oder die Gemische aus Di-, Tri- und höheren Polyisocyanaten, die beispielsweise durch Phosgenierung von entsprechenden Anilin/Formaldehyd-Kondensaten erhalten werden und Methylenbrücken aufweisende Polyphenylpolyisocyanate darstellen.

Diese monomeren Isocyanate weisen keine wesentlichen Umsetzungsprodukte der Isocyanatgruppen mit sich selbst auf.

Bei den monomeren Isocyanaten handelt es sich bevorzugt um Isocyanate mit 4 bis 20 C-Atomen. Beispiele für übliche Diisocyanate sind aliphatische Diisocyanate wie Tetramethylendiisocyanat, 1,5-Pentamethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanats, (z.B. Methyl- oder Ethyl-2,6-diisocyanatohexanoat),Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1-Isocyanato-3,3,5-trimethyl-5-(isocyanatomethyl)cyclohexan (Isophorondiisocyanat), 1,3- oder 1,4-Bis(isocyanatomethyl)cyclohexan oder 2,4-, oder 2,6-Diisocyanato-1-methylcyclohexan sowie 3 (bzw. 4), 8 (bzw. 9)-Bis(isocyanatomethyl)-tricyclo[5.2.1.0^{2.6}]decan-lsomerengemische, sowie aromatische Diisocyanate wie 2,4-oder 2,6-Toluylendiisocyanat und deren Isomerengemische, m- oder p-Xylylendiisocyanat, 2,4'- oder 4,4'-Diisocyanatodiphenylmethan und deren Isomerengemische, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldi-phenylmethan-4,4'-diisocyanat, Tetramethylxylylendiisocyanat, 1,4-Diisocyanatobenzol oder Diphenylether-4,4'-diisocyanat.

Besonders bevorzugt sind 1,6-Hexamethylendiisocyanat, 1,5-Pentamethylendiisocyanat 1,3-Bis(isocyanatomethyl)cyclo-hexan, Isophorondiisocyanat und 4,4'- oder 2,4'-Di(isocyanatocyclohexyl)methan, ganz besonders bevorzugt sind Isophorondiisocyanat und 1,6-Hexamethylendiisocyanat, insbesondere bevorzugt ist 1,6-Hexamethylendiisocyanat.

Es können auch Gemische der genannten Isocyanate vorliegen.

Isophorondiisocyanat liegt zumeist als ein Gemisch, und zwar der cis- und trans-Isomere vor, in der Regel im Verhältnis von ca. 60:40 bis 90:10 (w/w), bevorzugt von 70:30-90:10.

Dicyclohexylmethan-4,4'-diisocyanat kann ebenfalls als Gemisch der verschiedenen cis- und trans-Isomere vorliegen.

Für die vorliegende Erfindung können sowohl solche Diisocyanate eingesetzt werden, die durch Phosgenierung der korrespondierenden Amine erhalten werden, als auch solche, die ohne die Verwendung von Phosgen, d. h. nach phosgenfreien Verfahren, hergestellt werden. Nach Angaben der EP-A-0 126 299 (US 4 596 678), EP-A-126 300 (US 4 596 679) und EP-A-355 443 (US 5 087 739) beispielsweise können (cyclo)aliphatische Diisocyanate, z.B. wie 1,6-Hexamethylendiisocyanat (HDI), isomere aliphatische Diisocyanate mit 6 Kohlenstoffatomen im Alkylenrest, 4,4'- oder 2,4'-Di(isocyanatocyclohexyl)methan und 1-Isocyanato-3-isocyanato-methyl-3,5,5-trimethylcyclohexan (Isophorondiisocyanat bzw. IPDI) hergestellt werden durch Umsetzung der (cyclo)aliphatischen Diamine mit beispielsweise Harnstoff und Alkoholen zu (cyclo)aliphatischen Biscarbaminsäureestern und deren thermische Spaltung in die entsprechenden Diisocyanate und Alkohole. Die Synthese erfolgt meist kontinuierlich in einem Kreislaufverfahren und optional in Gegenwart von N-unsubstituierten Carbaminsäureestern, Dialkylcarbonaten und anderen aus dem Reaktionsprozess zurückgeführten Nebenprodukten. So erhaltene Diisocyanate weisen in der Regel einen sehr geringen oder sogar nicht messbaren Anteil an chlorierten Verbindungen auf, was beispielsweise in Anwendungen in der Elektronikindustrie vorteilhaft ist.

In einer Ausführungsform der vorliegenden Erfindung weisen die eingesetzten Isocyanate an hydrolysierbarem Chlor weniger als 100 Gew.ppm auf, bevorzugt weniger als 50 Gew.ppm, insbesondere weniger als 30 Gew.ppm und speziell weniger als 20 Gew.ppm. Dies kann beispielsweise gemessen werden durch die ASTM-Vorschrift D4663-98. Die Gehalte an gesamtem Chlor liegen beispielsweise bei unter 1000 Gew.ppm, bevorzugt unter 800 Gew.ppm und besonders bevorzugt unter 500 Gew.ppm (ermittelt per argentometrischer Titration nach Hydrolyse).

Selbstverständlich können auch Gemische aus solchen monomeren Isocyanaten, die durch Umsetzung der (cyclo)aliphatischen Diamine mit beispielsweise Harnstoff und Alkoholen und Spaltung der erhaltenen (cyclo)aliphatischen Biscarbaminsäureester erhalten worden sind, mit solchen Diisocyanaten, die durch Phosgenierung der korrespondierenden Amine erhalten worden sind, eingesetzt werden.

Die Polyisocyanate (A), zu denen die monomeren Isocyanate oligomerisiert werden können, sind in der Regel wie folgt charakterisiert:
Die mittlere NCO Funktionalität solcher Verbindungen beträgt in der Regel mindestens 1,8 und kann bis zu 8 betragen, bevorzugt 2 bis 5 und besonders bevorzugt 2,4 bis 4.

Der Gehalt an Isocyanatgruppen nach der Oligomerisierung, berechnet als NCO = 42 g/mol, beträgt, wenn nicht anders angegeben, in der Regel von 5 bis 25 Gew%.

Bevorzugt handelt es sich bei den Polyisocyanaten (A) um folgende Verbindungen:
1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im Allgemeinen einen NCO-Gehalt von 10 bis 30 Gew.-%, insbesondere 15 bis 25 Gew.-% und eine mittlere NCO-Funktionalität von 2,6 bis 8.
   Die Isocyanuratgruppen aufweisenden Polyisocyanate können in geringerem Umfang auch Urethan- und/oder Allophanat-Gruppen enthalten, bevorzugt mit einem Gehalt gebundenen Alkohols von kleiner 2 % bezogen auf das Polyisocyanat.
2) Uretdiongruppen aufweisende Polyisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten. Die Uretdiongruppen aufweisenden Polyisocyanate werden häufig im Gemisch mit anderen Polyisocyanaten, insbesondere den unter 1) genannten, erhalten. Uretdiongruppen aufweisende Polyisocyanate weisen üblicherweise Funktionalitäten von 2 bis 3 auf.
   Dies umfasst auch Uretdion-/lsocyanurat-Gemische beliebiger Zusammensetzung, insbesondere mit einem Gehalt an monomerem Uretdion (Dimer) von 1-40%, insbesondere 3-15, insbesondere 5-10 %.
   Dazu können die Diisocyanate unter Reaktionsbedingungen umgesetzt werden, unter denen sowohl Uretdiongruppen als auch die anderen Polyisocyanate gebildet werden, oder zunächst die Uretdiongruppen gebildet und diese anschließend zu den anderen Polyisocyanaten umgesetzt werden oder die Diisocyanate zunächst zu den anderen Polyisocyanaten und diese anschließend zu Uretdiongruppen-haltigen Produkten umgesetzt werden.
3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris-(6-isocyanatohexyl)-biuret oder dessen Gemische mit seinen höheren Homologen. Diese Biuretgruppen aufweisenden Polyisocyanate weisen im Allgemeinen einen NCO-Gehalt von 18 bis 24 Gew.-% und eine mittlere NCO-Funktionalität von 2,8 bis 6 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Diisocyanat, beispielsweise Hexamethylendiisocyanat oder Isophorondiisocyanat, mit ein- oder mehrwertigen Alkoholen. Diese Urethan- und/oder Allophanatgruppen aufweisenden Polyisocyanate haben im Allgemeinen einen NCO-Gehalt von 12 bis 24 Gew.-% und eine mittlere NCO-Funktionalität von 2,0 bis 4,5. Solche Urethan- und/oder Allophanatgruppen aufweisenden Polyisocyanate können unkatalysiert oder bevorzugt in Gegenwart von Katalysatoren, wie beispielsweise Ammoniumcarboxylaten oder -hydroxiden, oder Allophanatisierungskatalysatoren, z.B. Wismut-, Kobalt-, Cäsium-, Zn-(II)- oder Zr-(IV)-Verbindungen, jeweils in Anwesenheit von ein-, zwei- oder mehrwertigen, bevorzugt einwertigen Alkoholen, hergestellt werden. Diese Urethan- und/oder Allophanatgruppen aufweisenden Polyisocyanate treten häufig in Mischformen mit den unter 1) genannten Polyisocyanaten auf.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid zugänglich.
6) Iminooxadiazindiongruppen enthaltende Polyisocyanate, vorzugsweise von Hexamethylendiisocyanat oder Isophorondiisocyanat abgeleitet. Solche Iminooxadiazindiongruppen enthaltenden Polyisocyanate sind aus Diisocyanaten mittels spezieller Katalysatoren herstellbar.
7) Uretonimin-modifizierte Polyisocyanate.
8) Carbodiimid-modifizierte Polyisocyanate.
9) Hyperverzweigte Polyisocyanate, wie sie beispielsweise bekannt sind aus der DE-A1 10013186 oder DE-A1 10013187.
10) Polyurethan-Polyisocyanat-Präpolymere, aus Di- und/oder Polyisocyanaten mit Alkoholen.
11) Polyharnstoff-Polyisocyanat-Präpolymere.
12) Die Polyisocyanate 1)-11), bevorzugt 1), 3), 4) und 6) können nach deren Herstellung in Biuretgruppen- oder Urethan-/Allophanat-Gruppen aufweisende Polyisocyanate mit aromatisch, cycloaliphatisch oder aliphatisch gebundenen, bevorzugt (cyclo)aliphatisch gebundenen Isocyanatgruppen, überführt werden. Die Bildung von Biuretgruppen erfolgt beispielsweise durch Zugabe von Wasser oder Umsetzung mit Aminen. Die Bildung von Urethan- und/oder Allophanatgruppen erfolgt durch Umsetzung mit ein-, zwei- oder mehrwertigen, bevorzugt einwertigen Alkoholen, optional in Gegenwart von geeigneten Katalysatoren. Diese Biuret- oder Urethan-/Allophanatgruppen aufweisenden Polyisocyanate weisen im Allgemeinen einen NCO-Gehalt von 10 bis 25 Gew.-% und eine mittlere NCO-Funktionalität von 3bis 8 auf.
13) Hydrophil modifizierte Polyisocyanate, d.h. Polyisocyanate, die neben den unter 1-12 beschriebenen Gruppen solche enthalten, die formal durch Addition von Molekülen mit NCO-reaktiven Gruppen und hydrophilierenden Gruppen an die Isocyanatgruppen obiger Moleküle entstehen. Bei letzteren handelt es sich um nichtionische Gruppen wie Alkyl-Polyethylenoxid und/oder ionische, welche von Phosphorsäure, Phosphonsäure, Schwefelsäure oder Sulfonsäure, bzw. ihren Salzen abgeleitet sind.
14) Modifizierte Polyisocyanate für Dual Cure Anwendungen, d.h. Polyisocyanate, die neben den unter 1-11 beschriebenen Gruppen solche enthalten, die formal durch Addition von Molekülen mit NCO-reaktiven Gruppen und durch UV- oder aktinische Strahlung vernetzbare Gruppen an die Isocyanatgruppen obiger Moleküle entstehen. Bei diesen Molekülen handelt es sich beispielsweise um Hydroxyalkyl(meth)acrylate und andere Hydroxy-Vinylverbindungen.

Die oben aufgeführten Diisocyanate oder Polyisocyanate können auch zumindest teilweise in blockierter Form vorliegen.

Zur Blockierung eingesetzte Verbindungsklassen sind beschrieben in D. A. Wicks, Z. W. Wicks, Progress in Organic Coatings, 36, 148-172 (1999), 41, 1-83 (2001) sowie 43, 131-140 (2001).

Beispiele für zur Blockierung eingesetzte Verbindungsklassen sind Phenole, Imidazole, Triazole, Pyrazole, Oxime, N-Hydroxyimide, Hydroxybenzoesäureester, sekundäre Amine, Lactame, CH-acide cyclische Ketone, Malonsäureester oder Alkylacetoacetate.

In einer bevorzugten Ausführungsform der vorliegenden Erfindung ist das Polyisocyanat ausgewählt aus der Gruppe bestehend aus Isocyanuraten, Biureten, Urethanen und Allophanaten, bevorzugt aus der Gruppe bestehend aus Isocyanuraten, Urethanen und Allophanaten, besonders bevorzugt handelt es sich um ein isocyanuratgruppenhaltiges Polyisocyanat.

In einer besonders bevorzugten Ausführungsform handelt es sich bei dem Polyisocyanat um Isocyanuratgruppen enthaltende Polyisocyanate von 1,6-Hexamethylendiisocyanat.

In einer weiteren bevorzugten Ausführungsform handelt es sich bei dem Polyisocyanat um ein Gemisch von Isocyanuratgruppen enthaltenden Polyisocyanaten, ganz besonders bevorzugt von 1,6-Hexamethylendiisocyanat und von Isophorondiisocyanat.

In einer besonders bevorzugten Ausführungsform handelt es sich bei dem Polyisocyanat um ein Gemisch enthaltend niedrigviskose Polyisocyanate, bevorzugt Isocyanuratgruppen enthaltende Polyisocyanate, mit einer Viskosität von 600-1500 mPa*s, insbesondere unter 1200 mPa*s, niederviskose Allophanate und/oder Urethane mit einer Viskosität von 200-1600 mPa*s, insbesondere 600-1500 mPa*s, und/oder Iminooxadiazindiongruppen enthaltende Polyisocyanate.

In dieser Schrift wird die Viskosität bei 23 °C gemäß DIN EN ISO 3219/A.3 in einem Kegel-Platte-System mit einem Geschwindigkeitsgefälle von 1000 s⁻¹ angegeben, falls nicht anders vermerkt.

Das Verfahren zur Herstellung der Polyisocyanate kann erfolgen, wie in WO 2008 / 68198 beschrieben, dort besonders von Seite 20, Zeile 21 bis Seite 27, Zeile15, was hiermit durch Bezugnahme Bestandteil der vorliegenden Anmeldung sei.

Die Reaktion kann beispielsweise abgebrochen werden, wie dort von Seite 31, Zeile 19 bis Seite 31, Zeile 31 beschrieben und die Aufarbeitung erfolgen wie dort beschrieben von Seite 31, Zeile 33 bis Seite 32, Zeile 40, was hiermit jeweils durch Bezugnahme Bestandteil der vorliegenden Anmeldung sei.

Die Reaktion kann alternativ und bevorzugt erfolgen wie in der WO 2005 / 087828 für Ammonium-alpha-hydroxycarboxylat-Katalysatoren beschrieben. Die Reaktion kann beispielsweise abgebrochen werden, wie dort von Seite 11, Zeile 12 bis Seite 12, Zeile 5 beschrieben, was hiermit durch Bezugnahme Bestandteil der vorliegenden Anmeldung sei.

Die Reaktion kann alternativ wie in der CN 10178994A oder CN 101805304 beschrieben erfolgen.

Bei thermisch labilen Katalysatoren ist es weiterhin auch möglich, die Reaktion durch Erhitzen des Reaktionsgemischs auf eine Temperatur oberhalb von mindestens 80°C, bevorzugt mindestens 100 °C, besonders bevorzugt mindestens 120 °C abzubrechen. Dafür reicht in der Regel bereits die Erwärmung des Reaktionsgemischs, wie sie zur Abtrennung des unumgesetzten Isocyanats durch Destillation in der Aufarbeitung erforderlich ist.

Sowohl bei thermisch nicht-labilen als auch bei thermisch labilen Katalysatoren besteht die Möglichkeit, durch Zugabe von Deaktivatoren die Reaktion bei niedrigeren Temperaturen abzubrechen. Geeignete Deaktivatoren sind beispielsweise Chlorwasserstoff, Phosphorsäure, organische Phosphate, wie Dibutylphosphat oder Diethylhexylphosphat, und Carbamate wie Hydroxyalkylcarbamat.

Diese Verbindungen werden pur oder verdünnt in geeigneter Konzentration, die zum Reaktionsabbruch erforderlich ist, zugegeben.

Die Salze (B) bestehen aus einer (B1) phosphorhaltigen aciden Verbindung und (B2) einem offenkettigen Amin.

Bevorzugte phosphorhaltige acide Verbindungen (B1) sind Alkylphosphate (B1a), Phosphonate (B1b) und Mono-O-Alkyl-Phosphonite (B1c). Exemplarisch sind die Verbindungen in den allgemeinen Formeln (I) bis (V) dargestellt:

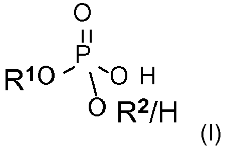

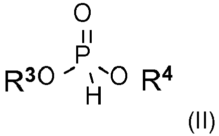

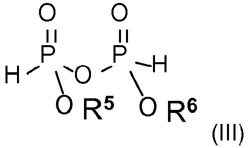

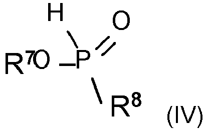

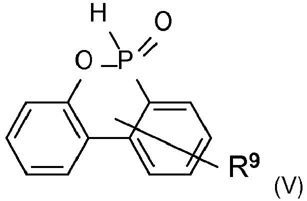

Alkylphosphate (B1a) sind beispielsweise Mono- und Di-C₁- bis C₁₈-Alkylphosphate und deren Gemische, bevorzugt solche mit C₁- bis C₈-Alkylgruppen, ganz besonders bevorzugt mit C₂- bis C₈-Alkylgruppen und insbesondere solche mit C₄- bis C₈-Alkylgruppen, und deren Gemische.
Beispiele für Alkylgruppen in Mono- und Dialkylphosphaten sind Methyl, Ethyl, iso-Propyl, n-Propyl, n-Butyl, iso-Butyl, sek-Butyl, tert.-Butyl, n-Pentyl, n-Hexyl, n-Heptyl, n-Octyl, iso-Octyl, 2-Ethyl-hexyl, n-Decyl, 2-Propylheptyl, n-Dodecyl, Tridedecyl-, Isotridecyl-, Tetradecyl-, Pentadecyl-, Hexadecyl-, Heptadecyl-, Octadecyl-, und Isooctadecyl.
Bevorzugt weisen die Phosphorsäurederivate keine weiteren als Alkyl-Substituenten auf, insbesondere keine polaren Substituenten, insbesondere keine Gruppen mit Heteroatomen wie Ether oder tert. Amine, beziehungsweise deren Oligomere und Polymere. Unter Heteroatomen versteht der Fachmann alle Atome außer Kohlenstoff und Wasserstoff. Heteroatome sind beispielsweise Stickstoff, Sauerstoff, Schwefel, Phosphor, Brom und Chlor.

Die Alkylgruppen in Dialkylphosphaten können dabei gleich oder verschieden sein, bevorzugt sind sie gleich.

Mischungen aus Mono- und Di-Alkylphosphaten können die gleichen Gruppen enthalten wie die Mono- oder Dialkylphosphate, zum Beispiel Ethyl-, Iso-propyl-, Butyl, 2-Ethylhexyl-Gruppen. Bevorzugt sind die Alkylgruppen gleich.

Weitere Beispiele sind Nacure® 4000 (früher Nacure® C 207) und Nacure® 4054, nicht näher definierte Alkylphosphorsäureester der Firma King Industries und Cycat® 296-9, einem nicht näher definierten Alkylphosphorsäureester, der Firma Cytec.

Phosphonate (B1b) sind niedervalente phosphorhaltige Verbindungen mit acidem Charakter insbesondere beispielsweise Dialkylphosphonate und Dialkyldiphosphonate.

Beispiele dafür sind Mono- und Di-C₁- bis C₁₂-Alkylphosphonate und deren Gemische. Beispiele für C₁- bis C₁₂-Alkylgruppen sind Methyl, Ethyl, iso-Propyl, n-Propyl, n-Butyl, iso-Butyl, sek-Butyl, tert.-Butyl, n-Hexyl, n-Heptyl, n-Octyl, n-Decyl, n-Dodecyl, 2-Ethylhexyl und 2-Propylheptyl. Bevorzugt sind Dialkylphosphonate, besonders bevorzugt solche mit C₁- bis C₈-Alkylgruppen, ganz besonders bevorzugt solche mit C₁-, C₂-, C₄- oder C₈-Alkylgruppen.
Die Alkylgruppen in Dialkylphosphonaten können dabei gleich oder verschieden sein, bevorzugt sind sie gleich.

Bevorzugte Phosphonate sind beschrieben in WO 2008/116895, dort besonders von Seite 10, Zeile 38 bis Seite 12, Zeile 41, was hiermit per Bezugnahme Bestandteil der vorliegenden Offenbarung sei. Als spezifische Beispiele seien explizit genannt:
- Phosphonsäuredioctylester, Phosphonsäuredi-n-octylester Irgafos® OPH
- Phosphonsäuredi-(2-ethylhexyl)-ester
- Phosphonsäuredibutylester

Mono-O-Alkyl-Phosphonite (B1c) sind beispielswese Derivate des 9,10-Dihydro-9-oxa-10-phosphaphenanthren-10-oxide (Sanko® HCA; DOPO). Die Kohlenstoffe des Aromaten können durch weitere Alkylgruppen substituiert sein.

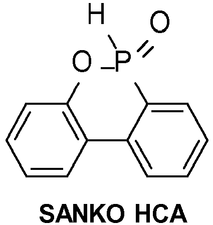

Die phosphorhaltigen aciden Verbindungen (B1) weisen bevorzugt einen pKs Wert kleiner 4 auf.

Offenkettige trisubstituierte Amine (B2) werden wie folgt beschrieben:
Die offenkettigen trisubstituierten Amine (B2) im Sinne dieser Erfindung besitzen keine Amingruppe in einem Zyklus.
Bei den offenkettigen trisubstituierten Aminen B2 handelt es sich bevorzugt um (cyclo)aliphatische Amine der allgemeinen Formel

NR₁R₂R₃,

in welcher
R1, R2, R3 unabhängig voneinander jeweils Alkyl, Cycloalkyl, Hydroxyalkyl oder Alkylether, bevorzugt Alkyl oder Alkylether, sein können. Alkyl ist bevorzugt C1 bis C18, besonders bevorzugt C2 bis C13. Alkyl ist linear oder verzweigt. Verzweigte Alkylgruppen sind z.B. iso-alkyl, 2-ethyl-hexyl, isopropyl-heptyl. Cycloalkyl ist bevorzugt ein Derivat der Cyclohexylgruppe, bevorzugt Cyclohexyl. Die Alkylgruppen können gleich oder verschieden sein, letzteres z.B. in N,N-Dimethyl-cyclohexylamin, Dimethylethylamin, Dimethylpropylamin, Dimethylisopropylamin.

Die offenkettigen trisubstituierten Amine (B2) können weitere funktionelle Gruppen wie Alkohol- oder Ether-gruppen enthalten, jedoch nicht bevorzugt.

Bevorzugte offenkettige trisubstituierte Amine (B2) sind Triethylamin, N,N-Dimethylcyclohexylamin und N-N-Dimethylethanolamin.

Die offenkettigen trisubstituierten Amine (B2) können auch Diamine wie N,N,N',N'-Tetramethyl-1,3-propandiamin und N,N-Diethyl-N',N'-diemethyl-1,3-propandiamin, oder Triamine, z.B. N,N,N',N",N"-Pentamethyldiethylentriamin sein. Besonders bevorzugt besitzen die offenkettigen trisubstituierten Amine (B2) genau eine Amingruppe.

Trisubstituierte cycloaliphatische Amine mit mindestens einer Amin-Gruppe in mindestens einem Zyklus, wie 1,4-Di-aza-bicyclo-[2.2.2]-octan oder Diazabicycloundecan, wie sie bevorzugt als Katalysatoren für die Urethanbildungsreaktion verwendet werden, sind keine offenkettigen Amine im Sinne der Erfindung, können aber in ihrer Funktion als Katalysator unabhängig davon anwesend sein.

Keine offenkettigen trisubstituierten Amine im Sinne dieser Erfindung sind sterisch gehinderte cyclische Amine (oft auch als HALS - oder HAS-Verbindungen bezeichnet; Hindered Amine (Light) Stabilizer) wie 2,2,6,6-Tetramethylpiperidin, 2,6-Di-tert.-butylpiperidin und/oder deren Derivate, wie beispielsweise Bis-(2,2,6,6-tetra-methyl-4-piperidyl)sebacat (Tinuvin® 770) (disubstituiertes Amin) 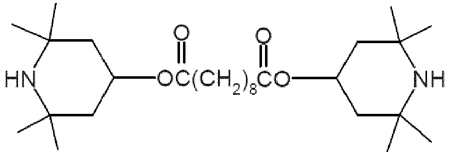 oder Mischungen von Bis-(1,2,2,6,6-pentamethyl-4-piperidinyl)-sebacat und 1-Methyl-8-(1,2,2,6,6-pentamethyl-4-piperidinyl)-sebacat (Tinuvin® 292).

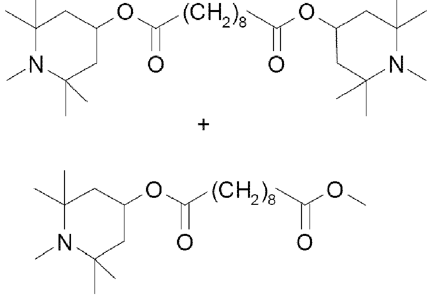

Diese sind z.B. erhältlich als Tinuvin®- und Chimassorb®-Marken der BASF SE und können unabhängig von dieser Erfindung in anderer Funktion als Lichtschutzmittel eingesetzt werden.

Bevorzugt liegt der pKs-Wert der zu den offenkettigen trisubstituierten Aminen (B2) ersten korrespondierenden Säure in wässriger Lösung zwischen 5 und 14 (25 °C), besonders bevorzugt zwischen 8,5 und 12, ganz besonders bevorzugt zwischen 9,5 und 11,0.

pKs-Werte der korrespondierenden Säuren in wässriger Lösung bei 25 °C:

| | |
|---|---|
| Tridekanamin: | 10,6 (25 °C) |
| Triethylamin: | 11,0 (25 °C) |
| Trimethylamin: | 9,8 (25 °C) |
| Benzyldimethylamin | 8,9 (20 °C) |
| N,N-Dimethylcyclohexylamin | 10,0 (20 °C) |

Salze (B) bestehend aus (B2) und (B1) sind beispielsweise die Kombinationen aus Hexadecyl-phospocholin, Triethylamin, N,N-Dimethylcyclohexylamin oder N,N-Dimethyl-ethanolamin mit Dibutylphosphat, Diethylhexylphosphat, Phosphorsäurebutylester (CAS 12788-93-1) mit variablen Verhältnissen von Butanol zu Phosphorsäure; Hordaphos® MOB, Hordaphos® MDB, Mischungen aus Mono-/Dibutylphosphat (Rhodafac® PA 80), oder Phosphorsäure-isotridecylester (Crafol® AP24), oder direkt als Salz, z.B. als Wirkkomponente, verdünnt mit Lösungsmittel, in Nacure® 4167 oder Nacure® 4575.

Die Löslichkeit der Salze (B) in den unpolaren Polyisocyanaten ist beschränkt, z.B. sind 400 Gew.ppm Nacure® 4167 (ca. 35-40%, entsprechend ca. -150 Gew.ppm Salz B) in reinem Isocyanurat nicht mehr vollständig löslich.

Die Salze (B) werden in Mengen bezogen auf die Komponente (A) von 10 bis 300, bevorzugt 20 bis 200, besonders bevorzugt 30 bis 100 Gew.ppm, ganz besonders bevorzugt 30 bis 80 Gew.ppm, insbesondere 30-60 Gew.ppm zugesetzt.

Bevorzugt werden die phosphorhaltige acide Verbindung (B1) und das offenkettige trisubstituierte Amin (B2) im Molverhältnis von 1.2:0.8 bis 0,5:1.5, besonders bevorzugt von 1:1 bis 0,8:1,2, ganz besonders bevorzugt stöchiometrisch eingesetzt.

Sterisch gehinderte Phenole (C) haben im Sinne der Erfindung die Funktion eines primären Antioxidanz. Darunter werden vom Fachmann üblicherweise Verbindungen verstanden, die Radikale abfangen.

Derartige sterisch gehinderte Phenole sind beispielsweise beschrieben in WO 2008/116894, bevorzugt die dort von Seite 14, Zeile 10 bis Seite 16, Zeile 10 beschriebenen Verbindungen, was hiermit per Bezugnahme Bestandteil der vorliegenden Offenbarung sei.

Dabei handelt es sich bevorzugt um solche Phenole, die an dem aromatischen Ring genau eine phenolische Hydroxygruppe aufweisen und besonders bevorzugt um solche, die in den ortho-Positionen, ganz besonders bevorzugt in ortho- und para-Position zur phenolischen Hydroxygruppe einen Substituenten, bevorzugt eine Alkylgruppe aufweisen, insbesondere um Alkyl-3-(3,5-di-tert.-butyl-4-hydroxyphenyl)-propionate, respektive um substituierte Alkyl-Derivate solcher Verbindungen.

Solche Phenole können auch Bestandteile eines polyphenolischen Systems mit mehreren Phenol-Gruppen sein Pentaerythrit-tetrakis(3-(3,5-di-tert.-butyl-4-hydroxyphenyl)propionat (z.B. Irganox® 1010); Ethylen-bis(oxyethylen)-bis-(3-(5-tert.-butyl-4-hydroxy-m-tolyl)-propionat) (z.B. Irganox® 245); 3,3',3",5,5',5"-Hexa-tert.-butyl-a,a',a"-(mesitylen-2,4,6-triyl)tri-p-kresol (z.B. Irganox® 1330); 1,3,5-Tris(3,5-di-tert.-butyl-4-hydroxybenzyl)-1,3,5-triazin-2,4,6(1H,3H,5H)-trion (z.B. Irganox® 3114), jeweils Produkte der Ciba Spezialitätenchemie, jetzt BASF SE.

Entsprechende Produkte sind z.B. unter den Handelsnamen Irganox® (BASF SE), Sumilizer® der Firma Sumitomo, Lowinox® der Fa. Great Lakes, Cyanox® der Fa. Cytec erhältlich.

Möglich sind auch z.B. Thiodiethylen-bis-[3-[3,5-di-tert.-butyl-4-hydroxyphenyl]-propionat] (Irganox® 1035) und 6,6'-Di-tert.-butyl-2,2'-thiodi-p-kresol (z.B. Irganox® 1081), jeweils Produkte BASF SE.

Bevorzugt sind 2,6-Di-tert.-butyl-4-methylphenol (BHT); Isooctyl-3-(3,5-di-tert.-butyl-4-hydroxyphenyl)-propionat (Irganox® 1135, CAS-Nr. 146598-26-7), Octadecyl-3-(3,5-di-tert.-butyl-4-hydroxyphenyl)-propionat (Irganox® 1076, CAS-Nr. 2082-79-3) und Pentaerythrit-tetrakis(3-(3,5-di-tert.-butyl-4-hydroxyphenyl)propionat (CAS-Nr. 6683-19-8; z.B. Irganox® 1010).

Die sekundären Antioxidantien (D) sind bevorzugt ausgewählt aus der Gruppe bestehend aus Phosphiten, Phosphoniten, Phosphonaten und Thioethern.

Phosphite sind Verbindungen des Typs P(OR^{a})(OR^{b}) (OR^{c}) mit R^{a}, R^{b}, R^{c} als gleichen oder unterschiedlichen aliphatischen oder aromatischen Resten (die auch cyclische oder spiro-Strukturen aufbauen können).

Bevorzugte Phosphonite sind beschrieben in WO 2008/116894, dort besonders von Seite 11, Zeile 8 bis Seite 14, Zeile 8, was hiermit per Bezugnahme Bestandteil der vorliegenden Offenbarung sei.

Phosphonate entsprechen den Verbindungen (B1b) und haben eine Doppelfunktion als sekundäres Antioxidanz (D) und Säure (B1) des Salzes (B).

Bevorzugte Thioether sind beschrieben in WO 2008/116893, dort besonders von Seite 11, Zeile 1 bis Seite 15, Zeile 37, was hiermit per Bezugnahme Bestandteil der vorliegenden Offenbarung sei.

Als Lewis-saure organische Metallverbindungen (E) kommen z.B. Zinnverbindungen in Frage, wie beispielsweise Zinn-(II)-salze von organischen Carbonsäuren, z.B. Zinn-(II)-diacetat, Zinn-(II)-dioctoat, Zinn-(II)-bis(ethylhexanoat) und Zinn-(II)-dilaurat und die Dialkylzinn-(IV)-salze von organischen Carbonsäuren, z.B. Dimethylzinn-diacetat, Dibutylzinn-diacetat, Dibutylzinn-dibutyrat, Dibutylzinn-bis(2-ethylhexanoat), Dibutylzinn-dilaurat, Dibutylzinn-maleat, Dioctylzinn-dilaurat und Dioctylzinn-diacetat.

Weitere bevorzugte Lewis-saure organische Metallverbindungen sind Zinksalze, beispielsweise Zink-(II)-diacetat und Zink-(II)-dioctoat.

Als Zinn- und Zink-freie Alternativen werden u.a. organische Metallsalze des Wismuts, Zirkons, Titans, Aluminiums, Eisens, Mangans, Nickels und Cobalts eingesetzt.

Dies sind z.B. Zirkoniumtetraacetylacetonat (z.B. K-KAT® 4205 der Firma King Industries); Zirkoniumdionate (z.B. K-KATO XC-9213; XC-A 209 und XC-6212 der Firma King Industries); Wismut-Verbindungen, insbesondere Tricarboxylate (z.B. K-KAT® 348, XC-B221; XC-C227, XC 8203 der Firma King Industries); Aluminiumdionat (z.B. K-KAT® 5218 der Firma King Industries). Zinn- und Zink-freie Katalysatoren werden ansonsten z.B. auch unter dem Handelsnamen Borchi® Kat der Firma Borchers, TK der Firma Goldschmidt oder BICAT® der Firma Shepherd, Lausanne angeboten.

Auch Bismut- und Kobalt-Katalysatoren, Cer-Salze wie Ceroctoate, und Cäsiumsalze können als Katalysatoren eingesetzt werden.
Bismut-Katalysatoren sind insbesondere Bismut-carboxylate, insbesondere Bismutoctoate, -ethylhexanoate, -neodecanoate, oder -pivalate; beispielsweise K-KAT 348 und XK-601 von King Industries, TIB KAT 716, 716LA, 716XLA, 718, 720, 789 von TIB Chemicals und solchen von Shepherd Lausanne, sowie Katalysator-Mischungen von z.B. Bismut- und Zink-Organylen.

Weitere Metallkatalysatoren werden von Blank et al. in Progress in Organic Coatings, 1999, Vol. 35, Seiten 19-29 beschrieben.

Diese Katalysatoren sind für lösungsmittel-, wasser-basierte und/oder blockierte Systeme geeignet.

Molybdän-, Wolfram- und Vanadium-Katalysatoren, werden insbesondere für den Umsatz blockierter Polyisocyanate unter WO 2004/076519 und WO 2004/076520 beschrieben.

Auch Cäsiumsalze können als Katalysatoren eingesetzt werden. Als Cäsiumsalze kommen dabei solche Verbindungen in Betracht, in denen folgende Anionen eingesetzt werden: F⁻, Cl⁻, ClO⁻, ClO₃⁻, ClO₄⁻, Br⁻, J⁻, JO₃⁻, CN⁻, OCN⁻, NO₂⁻, NO₃⁻, HCO₃⁻, CO₃²-, S²⁻, SH⁻, HSO₃⁻, SO₃²⁻, HSO₄⁻, SO₄²⁻, S₂O₂²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻ sowie (Cₙ₊₁H₂ₙ₋₂O₄)²⁻, wobei n für die Zahlen 1 bis 20 steht. Bevorzugt sind dabei Cäsiumcarboxylate, bei denen das Anion den Formeln (CₙH₂ₙ₋₁O₂)⁻ sowie (Cₙ₊₁H₂ₙ₋₂O₄)²⁻ mit n gleich 1 bis 20, gehorcht. Besonders bevorzugte Cäsiumsalze weisen als Anionen Monocarboxylate der allgemeinen Formel (CₙH₂ₙ₋₁O₂)⁻ auf, wobei n für die Zahlen 1 bis 20 steht. Hierbei sind insbesondere zu erwähnen Format, Acetat, Propionat, Hexanoat und 2-Ethylhexanoat.

Bevorzugte Lewis-saure organische Metallverbindungen sind Dimethylzinn-diacetat, Dibutylzinn-dibutyrat, Dibutylzinn-bis(2-ethylhexanoat), Dibutylzinn-dilaurat, Dioctylzinn-dilaurat, Zink-(II)-diacetat, Zink-(II)-dioctoat, Zirkon-Acetylacetonat und Zirkon-2,2,6,6-tetramethyl-3,5-heptandionat und Wismut-Verbindungen.

Besonders bevorzugt ist Dibutylzinndilaurat.

Des Weiteren ist noch ein Lösungsmittel oder Lösungsmittelgemisch (F) anwesend.

Als Lösungsmittel für die Polyisocyanatzusammensetzung, wie auch für die Bindemittel- und ggf. weitere Komponenten einsetzbar, sind solche Lösungsmittel, die keine gegenüber Isocyanatgruppen oder verkappten Isocyanatgruppen reaktive Gruppen aufweisen und in denen die Polyisocyanate zu mindestens 10 Gew%, bevorzugt zu mindestens 25, besonders bevorzugt zu mindestens 50, ganz besonders bevorzugt zu mindestens 75, insbesondere zu mindestens 90 und speziell zu mindestens 95 Gew% löslich sind.

Beispiele für derartige Lösungsmittel sind aromatische (einschließlich alkylierter Benzole und Naphthaline) und/oder (cyclo)aliphatische Kohlenwasserstoffe und deren Gemische, chlorierte Kohlenwasserstoffe, Ketone, Ester, alkoxylierte Alkansäurealkylester, Ether, respektive Gemische der Lösungsmittel.

Als aromatische Kohlenwasserstoffgemische sind solche bevorzugt, die überwiegend aromatische C₇- bis C₁₄-Kohlenwasserstoffe umfassen und einen Siedebereich von 110 bis 300 °C umfassen können, besonders bevorzugt sind Toluol, o-, m- oder p-Xylol, Trimethylbenzolisomere, Tetramethylbenzolisomere, Ethylbenzol, Cumol, Tetrahydronaphthalin und solche enthaltende Gemische.

Beispiele dafür sind die Solvesso®-Marken der Firma ExxonMobil Chemical, besonders Solvesso® 100 (CAS-Nr. 64742-95-6, überwiegend C₉ und C₁₀-Aromaten, Siedebereich etwa 154 - 178 °C), 150 (Siedebereich etwa 182 - 207 °C) und 200 (CAS-Nr. 64742-94-5), sowie die Shellsol®-Marken der Firma Shell, Caromax® (z.B. Caromax® 18) der Firma Petrochem Carless und Hydrosol der Firma DHC (z.B. als Hydrosol® A 170). Kohlenwasserstoffgemische aus Paraffinen, Cycloparaffinen und Aromaten sind auch unter den Bezeichnungen Kristallöl (beispielsweise Kristallöl 30, Siedebereich etwa 158 - 198 °C oder Kristallöl 60: CAS-Nr. 64742-82-1), Testbenzin (beispielsweise ebenfalls CAS-Nr. 64742-82-1) oder Solventnaphtha (leicht: Siedebereich etwa 155 - 180 °C, schwer: Siedebereich etwa 225 - 300 °C) im Handel erhältlich. Der Aromatengehalt derartiger Kohlenwasserstoffgemische beträgt in der Regel mehr als 90 Gew%, bevorzugt mehr als 95, besonders bevorzugt mehr als 98 und ganz besonders bevorzugt mehr als 99 Gew%. Es kann sinnvoll sein, Kohlenwasserstoffgemische mit einem besonders verringerten Gehalt an Naphthalin einzusetzen.

(Cyclo)aliphatische Kohlenwasserstoffe sind beispielsweise Dekalin, alkyliertes Dekalin und Isomerengemische von geradlinigen oder verzweigten Alkanen und/oder Cycloalkanen.

Der Gehalt an aliphatischen Kohlenwasserstoffen beträgt in der Regel weniger als 5, bevorzugt weniger als 2,5 und besonders bevorzugt weniger als 1 Gew%.
Ester sind beispielsweise n-Butylacetat, Ethylacetat, 1-Methoxypropylacetat-2 und 2-Methoxyethylacetat.

Ether sind beispielsweise THF, Dioxan sowie die Dimethyl-, -ethyl- oder -n-butylether von Ethylenglykol, Diethylenglykol, Triethylenglykol, Propylenglykol, Dipropylenglykol oder Tripropylenglykol.

Ketone sind beispielsweise Aceton, Diethylketon, Ethylmethylketon, Isobutylmethylketon, Methylamylketon und tert.-Butylmethylketon.

In geringer Menge können auch Alkohole als Lösungsmittel eingesetzt werden, z.B. wenn sie als Lösungsmittel für die polaren Salze (B) besser geeignet sind.

Bevorzugte Lösungsmittel sind n-Butylacetat, Ethylacetat, 1-Methoxypropylacetat-2, 2-Methoxyethylacetat, sowie deren Gemische, insbesondere mit den oben aufgeführten aromatischen Kohlenwasserstoffgemischen, insbesondere Xylol und Solvesso® 100. Derartige Gemische können im Volumenverhältnis 5:1 bis 1:5 erstellt werden, bevorzugt im Volumenverhältnis 4:1 bis 1:4, besonders bevorzugt im Volumenverhältnis 3:1 bis 1:3 und ganz besonders bevorzugt im Volumenverhältnis 2:1 bis 1:2.
Bevorzugte Beispiele sind Butylacetat/Xylol, Methoxypropylacetat/Xylol 1:1, Butylacetat/Solventnaphtha 100 1:1, Butylacetat/Solvesso® 100 1:2 und Kristallöl 30/Shellsol® A 3:1.
Bevorzugt sind Butylacetat, 1-Methoxypropylacetat-2, Methylamylketon, Xylol und Solvesso® 100.

Die Lösungsmittel sind in Bezug auf die Aufgabenstellung unterschiedlich problematisch. Patentgemäße Polyisocyanatzusammensetzungen, welche Ketone oder Aromatengemische (beispielsweise Solvent Naphtha-Mischungen) enthalten, sind besonders kritisch in Bezug auf Farbzahlentstehung bei Lagerung. Dagegen sind Ester, Ether, engere Aromatenschnitte wie Xylol und dessen Isomerengemische unproblematischer. Überraschend ist dies insofern, als Xylole analog den Aromatengemischen ebenfalls benzylische Wasserstoff-Atome tragen, die an einer Farbentstehung beteiligt sein könnten. Dazu kommt, dass Solvent Naphtha-Mischungen abhängig von der Bezugsquelle und Lagerzeiten sich bei Einsatz in den Polyisocyanatzusammensetzungen deutlich unterschiedlich auf den Farbzahldrift auswirken können.

In einer bevorzugten Form werden Polyisocyanate (A) in Abmischung mit einem Salz (B) bestehend aus einer phosphorhaltigen aciden Verbindung (B1) und einem offenkettigen Amin (B2), und sterisch gehindertem Phenol (C), und ggf. einem weiteren Antioxidanz (D) in einem ersten Schritt zur weiteren Verarbeitung zur Verfügung gestellt.

Diese Gemische werden dann in einem zweiten Schritt durch Zufügen von gegebenenfalls weiteren der Komponenten (B) bis (G), in die erfindungsgemäßen Polyisocyanatzusammensetzungen überführt.

Die erfindungsgemäßen Polyisocyanatzusammensetzungen sind beispielsweise wie folgt zusammengesetzt:
(A) 20 bis 95 Gew% Polyisocyanat (A), bevorzugt 30 bis 90 Gew%, besonders bevorzugt 40-80 Gew%,
(B) 10 bis 300 Gew.ppm Salz (B), bevorzugt 20 bis 200 und besonders bevorzugt 30 bis 100 Gew.ppm,
(C) 20 bis 2000 Gew.ppm sterisch gehindertes Phenol (C), bevorzugt 50 bis 1000, besonders bevorzugt 100-600, ganz besonders bevorzugt 100-300
(D) 20 bis 1000 Gew.ppm eines weiteren Antioxidanz (D), bevorzugt 50 bis 600, besonders bevorzugt 100 bis 300 Gew.ppm, und
(E) 5 bis 2000 Gew.ppm einer Lewis-sauren Verbindung (E), bevorzugt 10-1000 Gew.ppm, besonders bevorzugt 20 bis 300 Gew.ppm,
(F) 5-80 Gew% Lösungsmittel (F), bevorzugt 70 bis 10 Gew%, besonders bevorzugt 60-20 Gew%
   mit der Maßgabe, dass die Summe aus (A) und (F) immer 100 Gew% beträgt und sich die Gew.ppm-Angaben auf Polyisocyanat (A) beziehen.
(G) ggf. zusätzliche lacktypische Additive zusätzlich zu den Komponenten (A) bis (F).

Sind Komponenten (G) anwesend, so werden diese nicht in die %-Angaben der Zusammensetzung der Komponenten (A) bis (F) eingerechnet.

Die erfindungsgemäßen Polyisocyanatzusammensetzungen können mit Vorteil als Härter zusätzlich zu mindestens einem Bindemittel in Polyurethanlacken eingesetzt werden.

Die Umsetzung mit Bindemitteln kann dabei gegebenenfalls nach einen langen Zeitraum erfolgen, der eine entsprechende Lagerung der Polyisocyanatzusammensetzung erfordert. Die Lagerung von Polyisocyanatzusammensetzung erfolgt zwar bevorzugter weise bei Raumtemperatur, kann aber auch bei höheren Temperaturen erfolgen. In der Praxis sind Erwärmung solcher Polyisocyanatzusammensetzung auf 40 °C, 60 °C, selbst bis 80 °C durchaus möglich.

Bei den Bindemitteln kann es sich beispielsweise um Polyacrylatpolyole, Polyesterpolyole, Polyetherpolyole, Polyurethanpolyole; Polyharnstoffpolyole; Polyesterpolyacrylatpolyole; Polyesterpolyurethanpolyole; Polyurethanpolyacrylatpolyole, Polyurethanmodifizierte Alkydharze; Fettsäuremodifizierte Polyesterpolyurethanpolyole, Kopolymerisate mit Allylethern, Propfpolymerisate aus den genannten Stoffgruppen mit z.B. unterschiedlichen Glasübergangstemperaturen, sowie Mischungen der genannten Bindemittel handeln. Bevorzugt sind Polyacrylatpolyole, Polyesterpolyole und Polyurethanpolyole.

Bevorzugte OH-Zahlen, gemessen gemäß DIN 53240-2 (potentiometrisch), sind 40-350 mg KOH/g Festharz für Polyester, bevorzugt 80-180 mg KOH/g Festharz, und 15-250 mg KOH/g Festharz für Polyacrylatole, bevorzugt 80-160 mg KOH/g.

Zusätzlich können die Bindemittel eine Säurezahl gemäß DIN EN ISO 3682 (potentiometrisch) bis 200 mg KOH/g, bevorzugt bis 150 und besonders bevorzugt bis 100 mg KOH/g aufweisen.

Besonders bevorzugte Bindemittel sind Polyacrylatpolyole und Polyesterole.

Polyacrylatpolyole weisen bevorzugt ein Molekulargewicht Mₙ von mindestens 500, besonders bevorzugt mindestens 1200 g/mol auf. Das Molekulargewicht Mₙ kann prinzipiell nach oben unbegrenzt sein, bevorzugt bis zu 50.000, besonders bevorzugt bis zu 20.000 g/mol, ganz besonders bevorzugt bis zu 10.000 g/mol und insbesondere bis zu 5.000 g/mol betragen.

Die hydroxyfunktionellen Monomere (siehe unten) werden in solchen Mengen bei der Kopolymerisation mit verwendet, dass die obengenannten Hydroxylzahlen der Polymere resultieren, die im allgemeinen einem Hydroxygruppengehalt der Polymere von 0,5 bis 8, vorzugsweise 1 bis 5 Gew.-% entsprechen.

Dabei handelt es sich um hydroxygruppenhaltige Kopolymere aus mindestens einem hydroxygruppenhaltigen (Meth)acrylat mit mindestens einem weiteren polymerisationsfähigen Komonomer ausgewählt aus der Gruppe bestehend aus (Meth)acrylsäurealkylestern, Vinylaromaten, a, β-ungesättigten Carbonsäuren und anderen Monomeren.

Als (Meth)acrylsäurealkylestern genannt seien z.B. C₁-C₂₀-Alkyl(meth)acrylate, Vinylaromaten sind solche mit bis zu 20 C-Atomen, α,β-ungesättigte Carbonsäuren umfassen auch deren Anhydride und andere Monomere sind beispielsweise Vinylester von bis zu 20 C-Atomen enthaltenden Carbonsäuren, ethylenisch ungesättigte Nitrile, Vinylether von 1 bis 10 C-Atome enthaltenden Alkoholen und, weniger bevorzugt, aliphatische Kohlenwasserstoffe mit 2 bis 8 C-Atomen und 1 oder 2 Doppelbindungen.

Als (Meth)acrylsäurealkylester bevorzugt sind solche mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, Vinylstearat, Vinylpropionat und Vinylacetat.

a, β-Ungesättigte Carbonsäuren und deren Anhydride können beispielsweise sein Acrylsäure, Methacrylsäure, Fumarsäure, Crotonsäure, Itaconsäure, Maleinsäure oder Maleinsäureanhydrid, bevorzugt Acrylsäure.

Als hydroxyfunktionelle Monomere seien Monoester von α,β-ungesättigten Carbonsäuren, wie Acrylsäure, Methacrylsäure (in dieser Schrift kurz als "(Meth)acrylsäure" bezeichnet), mit Di- oder Polyolen erwähnt, die vorzugsweise 2 bis 20 C-Atome und wenigstens zwei Hydroxygruppen aufweisen, wie Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,4-Butandiol, 1,5-Pentandiol, Neopentylglykol, Hydroxypivalinsäureneopentylglykolester, 2-Ethyl-1,3-Propandiol, 2-Methyl-1,3-Propandiol, 2-Butyl-2-ethyl-1,3-Propandiol, 1,6-Hexandiol, 2-Methyl-1,5-pentandiol, 2-Ethyl-1,4-butandiol, 2-Ethyl-1,3-Hexandiol, 2,4-Diethyl-oktan-1,3-diol, 2,2-Bis(4-hydroxycyclohexyl)propan, 1,1-, 1,2-, 1,3- und 1,4-Bis(hydroxymethyl)-cyclohexan, 1,2-, 1,3- oder 1,4-Cyclohexandiol, Glycerin, Trimethylolethan, Trimethylolpropan, Trimethylolbutan, Pentaerythrit, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit, Isomalt, Poly-THF mit einem Molekulargewicht zwischen 162 und 4500, bevorzugt 250 bis 2000, Poly-1,3-propandiol oder Polypropylenglykol mit einem Molekulargewicht zwischen 134 und 2000 oder Polyethylenglykol mit einem Molekulargewicht zwischen 238 und 2000 sein.

Bevorzugt sind 2-Hydroxyethylacrylat, 2-Hydroxyethylmethacrylat, 2- oder 3-Hydroxypropylacrylat, 1,4-Butandiolmonoacrylat oder 3-(Acryloyloxy)-2-hydroxypropylacrylat und besonders bevorzugt 2-Hydroxyethylacrylat und/oder 2-Hydroxyethylmethacrylat.

Als vinylaromatische Verbindungen kommen z.B. Vinyltoluol, α-Butylstyrol, α-Methylstyrol, 4-n-Butyl-styrol, 4-n-Decylstyrol und vorzugsweise Styrol in Betracht.

Beispiele für Nitrile sind Acrylnitril und Methacrylnitril.

Geeignete Vinylether sind z.B. Vinylmethylether, Vinylisobutylether, Vinylhexylether und Vinyloctylether.

Als nicht aromatische Kohlenwasserstoffe mit 2 bis 8 C-Atomen und einer oder zwei olefinischen Doppelbindungen seien Butadien, Isopren, sowie Ethylen, Propylen und Isobutylen genannt.

Weiterhin sind N-Vinylformamid, N-Vinylpyrrolidon sowie N-Vinylcaprolactam einsetzbar, weiterhin, ethylenisch ungesättigte Säuren, insbesondere Carbonsäuren, Säureanhydride oder Säureamide, sowie Vinylimidazol. Auch Epoxidgruppen aufweisende Komonomere wie z.B. Glycidylacrylat oder -methacrylat oder Monomere wie N-Methoxymethylacrylamid oder-methacrylamid können in geringen Mengen mit verwendet werden.

Bevorzugt sind Ester der Acrylsäure bzw. der Methacrylsäure mit 1 bis 18, vorzugsweise 1 bis 8 Kohlenstoffatomen im Alkoholrest wie z.B. Methylacrylat. Ethylacrylat, Isopropylacrylat, n-Propylacrylat, n-Butylacrylat, 2-Ethylhexylacrylat, n-Stearylacrylat, die diesen Acrylaten entsprechenden Methacrylate, Styrol, alkylsubstituierte Styrole, Acrylnitril, Methacrylnitril, Vinylacetat oder Vinylstearat bzw. beliebige Gemische derartiger Monomere.

Die Hydroxygruppen tragenden Monomere werden in die Kopolymerisation der Hydroxygruppen tragenden (Meth)Acrylate im Gemisch mit anderen polymerisierbaren, bevorzugt radikalisch polymerisierbaren Monomeren, eingesetzt, bevorzugt solche, welche zu mehr als 50 Gew% aus C₁-C₂₀-, bevorzugt C₁- bis C₄-Alkyl(meth)acrylat, (Meth)acrylsäure, Vinylaromaten mit bis zu 20 C-Atomen, Vinylestern von bis zu 20 C-Atomen enthaltenden Carbonsäuren, Vinylhalogeniden, nicht aromatischen Kohlenwasserstoffen mit 4 bis 8 C-Atomen und 1 oder 2 Doppelbindungen, ungesättigten Nitrilen und deren Mischungen bestehen. Besonders bevorzugt sind die Polymere, die neben den Hydroxygruppen tragenden Monomeren zu mehr als 60 Gew% aus C₁-C₁₀-Alkyl(meth)acrylaten, Styrol und dessen Derivaten oder deren Mischungen bestehen.

Die Herstellung der Polymerisate kann durch Polymerisation nach üblichen Verfahren durchgeführt werden. Vorzugsweise erfolgt die Herstellung der Polymerisate in einer Emulsionspolymerisation oder in organischer Lösung. Möglich sind kontinuierliche oder diskontinuierliche Polymerisationsverfahren. Von den diskontinuierlichen Verfahren sind das Batch- und das Zulaufverfahren zu nennen, wobei letzteres bevorzugt ist. Bei dem Zulaufverfahren wird das Lösungsmittel allein oder mit einem Teil des Monomergemisches vorgelegt, auf die Polymerisationstemperatur erwärmt, die Polymerisation im Fall einer Monomervorlage radikalisch gestartet und das restliche Monomergemisch zusammen mit einem Initiatorgemisch im Verlauf von 1 bis 10 Stunden, vorzugsweise 3 bis 6 Stunden, zudosiert. Optional wird anschließend noch nachaktiviert, um die Polymerisation bis zu einem Umsatz von mindestens 99 % durchzuführen.

Weitere Bindemittel sind z.B. Polyesterpolyole, wie sie durch Kondensation von Polycarbonsäuren, insbesondere Dicarbonsäuren mit Polyolen, insbesondere Diolen erhältlich sind. Um eine für die Polymerisation angemessene Funktionalität des Polyesterpolyols zu gewährleisten werden partiell auch Triole, Tetrole etc. wie auch Trisäuren, etc. eingesetzt.

Polyesterpolyole, sind z.B. aus Ullmanns Enzyklopädie der technischen Chemie, 4. Auflage, Band 19, S. 62 bis 65 bekannt. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, aromatisch oder heterocyclisch sein und optional, z.B. durch Halogenatome, substituiert und/oder ungesättigt sein. Als Beispiele hierfür seien genannt:
Oxalsäure, Maleinsäure, Fumarsäure, Bernsteinsäure, Glutarsäure, Adipinsäure, Sebacinsäure, Dodekandisäure, o-Phthalsäure, Isophthalsäure, Terephthalsäure, Trimellithsäure, Azelainsäure, 1,4-Cyclohexandicarbonsäure oder Tetrahydrophthalsäure, Korksäure, Azelainsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäureanhydrid, dimere Fettsäuren, deren Isomere und Hydrierungsprodukte sowie veresterbare Derivate, wie Anhydride oder Dialkylester, beispielsweise C₁-C₄-Alkylester, bevorzugt Methyl-, Ethyl- oder n-Butylester, der genannten Säuren eingesetzt werden. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, besonders bevorzugt Bernsteinsäure, Adipinsäure, Sebacinsäure und Dodecandicarbonsäure.

Als mehrwertige Alkohole kommen zur Herstellung der Polyesterole in Betracht 1,2-Propandiol, Ethylenglykol, 2,2-Dimethyl-1,2-Ethandiol, 1,3-Propandiol, 1,2-Butandiol, 1,3-Butandiol, 1,4-Butandiol, 3-Methylpentan-1,5-diol, 2-Ethylhexan-1,3-diol, 2,4-Diethyloctan-1,3-diol, 1,6-Hexandiol, Poly-THF mit einer Molmasse zwischen 162 und 4500, bevorzugt 250 bis 2000, Poly-1,3-propandiol mit einer Molmasse zwischen 134 und 1178, Poly-1,2-propandiol mit einer Molmasse zwischen 134 und 898, Polyethylenglykol mit einer Molmasse zwischen 106 und 458, Neopentylglykol, Hydroxypivalinsäureneopentylglykolester, 2-Ethyl-1,3-Propandiol, 2-Methyl-1,3-Propandiol, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, Trimethylolbutan, Trimethylolpropan, Trimethylolethan, Neopentylglykol, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder Isomalt, die optional wie oben beschrieben alkoxiliert sein können.

Bevorzugt sind Alkohole der allgemeinen Formel HO-(CH₂)ₓ-OH, wobei x eine Zahl von 1 bis 20, bevorzugt eine gerade Zahl von 2 bis 20 ist. Bevorzugt sind Ethylenglykol, Butan-1,4-diol, Hexan-1,6-diol, Octan-1,8-diol und Dodecan-1,12-diol. Weiterhin bevorzugt ist Neopentylglykol.

Ferner kommen auch Polycarbonat-Diole in Betracht, wie sie z.B. durch Umsetzung von Phosgen mit einem Überschuss von den als Aufbaukomponenten für die Polyesterpolyole genannten niedermolekularen Alkohole erhalten werden können.

Geeignet sind auch Polyesterdiole auf Lacton-Basis, wobei es sich um Homo- oder Mischpolymerisate von Lactonen, bevorzugt um endständige Hydroxygruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, β-Propiolacton, gamma-Butyrolacton und/oder Methyl-ε-caprolacton, 4-Hydroxybenzoesäure, 6-Hydroxy-2-naphthalinsäure oder Pivalolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

In Polyurethanlacken sind Molmassen Mₙ der Polyester von 800 - 4000 g/mol üblich, wobei die hier verwendeten Polyester nicht darauf beschränkt sind.

Weiterhin sind als Bindemittel auch Polyetherole geeignet, die durch Addition von Ethylenoxid, Propylenoxid und/oder Butylenoxid, bevorzugt Ethylenoxid und/oder Propylenoxid und besonders bevorzugt Ethylenoxid an H-aktive Komponenten hergestellt werden. Ebenso sind Polykondensate aus Butandiol geeignet. In Polyurethanlacken sind Molmassen der Polyether von 500-2000 g/mol üblich, wobei die hier verwendeten Polyether nicht darauf beschränkt sind.

Die Polymere können zumindest teilweise durch sogenannte Reaktivverdünner ersetzt werden. Dabei kann es sich um blockierte sekundäre oder primäre Amine (Aldimine und Ketime) oder um Verbindungen mit sterisch gehinderten und / oder elektronenarmen sekundären Aminogruppen handeln, beispielsweise Asparaginsäureester gemäß EP 403921 oder WO 2007/39133.

Als weitere lacktypische Additive (G), können beispielsweise verwendet werden: weitere Antioxidantien, UV-Stabilisatoren wie UV-Absorber und geeignete Radikalfängern (insbesondere HALS-Verbindungen, Hindered Amin Light Stabilizer), Aktivatoren (Beschleuniger), Trockenmittel, Füllmittel, Pigmente, Farbstoffe, antistatische Agenzien, Flammschutzmittel, Verdicker, thixotrope Agenzien, oberflächenaktive Agenzien, Viskositätsmodifikatoren, Plastifizierer oder Chelatbildner. Bevorzugt sind UV-Stabilisatoren.

Geeignete UV-Absorber umfassen Oxanilide, Triazine und Benzotriazole (letztere erhältlich z.B. als Tinuvin® -Marken der BASF SE) und Benzophenone (z.B. Chimassorb® 81 der BASF SE). Bevorzugt sind z.B. 95 % Benzolpropansäure, 3-(2H-Benzotriazol-2-yl)-5-(1,1-dimethylethyl)-4-hydroxy-, C7-9-verzweigte und lineare Alkylester; 5 % 1-Methoxy-2-propylacetat (z.B. Tinuvin® 384) und α-[3-[3-(2H-Benzotriazol-2-yl)-5-(1,1,-dimethylethyl)-4-hydroxyphenyl]-1-oxopropyl]-ω-hydroxypoly-(oxo-1,2-ethanediyl) (z.B. Tinuvin® 1130), jeweils Produkte z.B. der BASF SE. DL-Alpha-Tocopherol, Tocopherol, Zimtsäurederivate und Cyanoacrylate können ebenfalls zu diesem Zweck eingesetzt werden.

Diese können allein oder zusammen mit geeigneten Radikalfängern, beispielsweise sterisch gehinderten Aminen (oft auch als HALS -oder HAS-Verbindungen bezeichnet; Hindered Amine (Light) Stabilizer) wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat, eingesetzt werden. Diese sind z.B. erhältlich als Tinuvin®- und Chimassorb®-Marken der BASF SE. Bevorzugt im gemeinsamen Einsatz mit Lewis-Säuren sind jedoch solche gehinderten Amine, die N-alkyliert sind, beispielsweise Bis (1,2,2,6,6-pentamethyl-4-piperidinyl)-[[3,5-bis(1,1-dimethylethyl)-4-hydroxyphenyl]methyl]butylmalonat (z.B. Tinuvin® 144 der BASF SE); eine Mischung aus Bis(1,2,2,6,6-Pentamethyl-4-Piperidinyl)sebacat und Methyl(1,2,2,6,6-Pentamethyl-4-Piperidinyl)sebacat (z.B. Tinuvin® 292 der BASF SE); oder die N-(O-alkyliert) sind, wie z.B. Dekandisäure-bis-(2,2,6,6-tetramethyl-1-(octyloxy)-4-piperidinyl)-ester, Reaktionsprodukte mit 1,1-Dimethylethylhydroperoxyd und Oktan (z.B. Tinuvin® 123 der BASF SE), und speziell dem HALS-Triazin "2-Aminoethanol, Reaktionsprodukte mit Cyclohexan und peroxidiertem N-butyl-2,2,6,6-tetramethyl-4-piperidinamine-2,4,6-trichloro-1,3,5-triazin Reaktionsprodukt" (z.B. Tinuvin® 152 der BASF SE).

UV-Stabilisatoren werden üblicherweise in Mengen von 0,1 bis 5,0 Gew.-%, bezogen auf die in der Zubereitung enthaltenen festen Komponenten, eingesetzt.

Als Verdicker kommen neben radikalisch (ko)polymerisierten (Ko)Polymeren, übliche organische und anorganische Verdicker wie Hydroxymethylcellulose oder Bentonit in Betracht.

Als Chelatbildner können z.B. Ethylendiaminessigsäure und deren Salze sowie β-Diketone verwendet werden.

Weiterhin können noch als Komponente (G) Füllstoffe, Farbstoffe und/oder Pigmente enthalten sein.

Pigmente im eigentlichen Sinne sind gemäß CD Römpp Chemie Lexikon - Version 1.0, Stuttgart/New York: Georg Thieme Verlag 1995 unter Verweis auf DIN 55943 partikelförmige "im Anwendungsmedium praktisch unlösliche, anorganische oder organische, bunte oder unbunte Farbmittel".

Praktisch unlöslich bedeutet dabei eine Löslichkeit bei 25 °C unter 1 g / 1000 g Anwendungsmedium, bevorzugt unter 0,5, besonders bevorzugt unter 0,25, ganz besonders bevorzugt unter 0,1 und insbesondere unter 0,05 g / 1000 g Anwendungsmedium.

Beispiele für Pigmente im eigentlichen Sinne umfassen beliebige Systeme von Absorptions- und/oder Effektpigmenten, bevorzugt Absorptionspigmente. Anzahl und Auswahl der Pigmentkomponenten sind dabei keinerlei Beschränkungen unterworfen. Sie können den jeweiligen Erfordernissen, beispielsweise dem gewünschten Farbeindruck, beliebig angepasst werden, beispielsweise wie in Schritt a) beschrieben. Beispielsweise können alle Pigmentkomponenten eines standardisierten Mischlacksystems zugrunde liegen.

Unter Effektpigmenten sind alle Pigmente zu verstehen, die einen plättchenförmigen Aufbau zeigen und einer Oberflächenbeschichtung spezielle dekorative Farbeffekte verleihen. Bei den Effektpigmenten handelt es sich beispielsweise um alle in der Fahrzeug- und Industrielackierung üblicherweise einsetzbaren effektgebenden Pigmente. Beispiele für derartige Effektpigmente sind reine Metallpigmente; wie z.B. Aluminium-, Eisen- oder Kupferpigmente; Interferenzpigmente, wie z.B. titandioxidbeschichteter Glimmer, eisenoxidbeschichteter Glimmer, mischoxidbeschichteter Glimmer (z.B. mit Titandioxid und Fe₂O₃ oder Titandioxid und Cr₂O₃), metalloxidbeschichtetes Aluminium, oder Flüssigkristallpigmente.

Bei den farbgebenden Absorptionspigmenten handelt es sich beispielsweise um übliche in der Lackindustrie einsetzbare organische oder anorganische Absorptionspigmente. Beispiele für organische Absorptionspigmente sind Azopigmente, Phthalocyanin-, Chinacridon- und Pyrrolopyrrolpigmente. Beispiele für anorganische Absorptionspigmente sind Eisenoxidpigmente, Titandioxid und Ruß.

Farbstoffe sind ebenfalls Farbmittel und unterscheiden sich von den Pigmenten durch ihre Löslichkeit im Anwendungsmedium, d.h. sie weisen bei 25 °C eine Löslichkeit über 1 g / 1000 g im Anwendungsmedium auf.

Beispiele für Farbstoffe sind Azo-, Azin-, Anthrachinon-, Acridin-, Cyanin-, Oxazin-, Polymethin-, Thiazin-, Triarylmethan-Farbstoffe. Diese Farbstoffe können Anwendung finden als basische oder kationische Farbstoffe, Beizen-, Direkt-, Dispersions-, Entwicklungs-, Küpen-, Metallkomplex-, Reaktiv-, Säure-, Schwefel-, Kupplungs- oder Substantive Farbstoffe.

Als koloristisch inerte Füllstoffe sind alle Stoffe/Verbindungen zu verstehen, die einerseits koloristisch unwirksam sind; d.h. die eine geringe Eigenabsorption zeigen und deren Brechzahl ähnlich der Brechzahl des Beschichtungsmediums ist, und die andererseits in der Lage sind, die Orientierung (parallele Ausrichtung) der Effektpigmente in der Oberflächenbeschichtung, d.h. im applizierten Lackfilm, zu beeinflussen, ferner Eigenschaften der Beschichtung oder der Beschichtungsmassen, beispielsweise Härte oder Rheologie. Im Folgenden sind beispielhaft einsetzbare inerte Stoffe/Verbindungen genannt, ohne jedoch den Begriff koloristisch inerte topologiebeeinflussende Füllstoffe auf diese Beispiele zu beschränken. Geeignete inerte Füllstoffe entsprechend der Definition können beispielsweise transparente oder semitransparente Füllstoffe oder Pigmente sein, wie z.B. Kieselgele, Blancfixe, Kieselgur, Talkum, Calciumcarbonate, Kaolin, Bariumsulfat, Magnesiumsilikat, Aluminiumsilikat, kristallines Siliziumdioxid, amorphe Kieselsäure, Aluminiumoxid, Mikrokugeln oder Mikrohohlkugeln z.B. aus Glas, Keramik oder Polymeren mit Größen von beispielsweise 0,1-50 µm. Weiterhin können als inerte Füllstoffe beliebige feste inerte organische Partikel, wie z.B. Harnstoff-Formaldehyd-Kondensationsprodukte, mikronisiertes Polyolefinwachs und mikronisiertes Amidwachs, eingesetzt werden. Die inerten Füllstoffe können jeweils auch in Mischung eingesetzt werden. Bevorzugt wird jedoch jeweils nur ein Füllstoff eingesetzt.

Bevorzugte Füllstoffe umfassen Silikate, z. B. durch Hydrolyse von Siliciumtetrachlorid erhältliche Silikate wie Aerosil® der Fa. Degussa, Kieselerde, Talkum, Aluminiumsilikate, Magnesiumsilikate, Calciumcarbonate etc.
Bevorzugt enthält die Polyisocyanatzusammensetzung keine Trockenmittel, Füllmittel, Pigmente, Farbstoffe, Flammschutzmittel oder Verdicker. Diese befinden sich bevorzugt in der mit dem Polyisocyanat reaktiven Zusammensetzung.

Zur Härtung des Films werden Polyisocyanatzusammensetzung und Bindemittel in einem Molverhältnis von Isocyanatgruppen zu gegenüber Isocyanat reaktiven Gruppen von 0,2:1 bis 5:1, bevorzugt 0,8:1 bis 1,2:1 und speziell 0,9:1 bis 1,1:1 miteinander vermischt, wobei gegebenenfalls noch weitere lacktypische Bestandteile eingemischt werden können, und auf das Substrat aufgetragen und bei Umgebungstemperatur bis 150 °C ausgehärtet.

Unter "Härtung" wird im Rahmen der vorliegenden Erfindung das Erzeugen einer klebfreien Beschichtung auf einem Substrat verstanden, indem man die auf das Substrat aufgetragene Beschichtungsmasse zumindest solange auf die oben angegebene Temperatur erwärmt, bis mindestens die gewünschte Klebfreiheit eingetreten ist.

Unter einer Beschichtungsmasse wird im Rahmen der vorliegenden Schrift eine Mischung zumindest der Komponenten verstanden, die zum Beschichten mindestens eines Substrats zum Zwecke einer Ausbildung eines Films und, nach Härtung, einer klebfreien Beschichtung vorgesehen ist.

Die Beschichtung der Substrate erfolgt nach üblichen, dem Fachmann bekannten Verfahren, wobei man wenigstens eine Beschichtungsmasse auf das zu beschichtende Substrat in der gewünschten Stärke aufbringt und die optional enthaltenen flüchtigen Bestandteile der Beschichtungsmasse, optional unter Erhitzen, entfernt. Dieser Vorgang kann gewünschten falls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren, Hinterspritzen oder Koextrudieren erfolgen.

Die Dicke einer solchen zu härtenden Schicht kann von 0,1 µm bis mehrere mm betragen, bevorzugt von 1 bis 2.000 µm, besonders bevorzugt 5 bis 200 µm, ganz besonders bevorzugt von 5 bis 60 µm (bezogen auf den Lack im Zustand in dem das Lösungsmittel aus dem Lack entfernt ist).

Weiterhin sind auch Substrate, beschichtet mit einer erfindungsgemäßen Mehrschichtlackierung Gegenstand der vorliegenden Erfindung.

Besonders geeignet sind solche Polyurethanlacke für Anwendungen, in denen eine besonders hohe Applikationssicherheit, Außenwitterungsbeständigkeit, Optik, Lösemittel-, Chemikalien- und Wasserfestigkeit gefordert werden.

Die erhaltenen zweikomponentigen Beschichtungsmassen und Lackformulierungen (zwei Komponenten hier im Sinne der Polyisocyanatzusammensetzung (A) bis (G) und der mit ihr reaktive Zusammensetzung) eignen sich zum Beschichten von Substraten wie Holz, Holzfurnier, Papier, Pappe, Karton, Textil, Folie, Leder, Vlies, Kunststoffoberflächen, Glas, Keramik, mineralischen Baustoffen, wie Zement-Formsteine und Faserzementplatten oder Metallen, die jeweils optional vorbeschichtet bzw. vorbehandelt sein können.

Derartige Beschichtungsmassen eignen sich als oder in Innen- oder Außenbeschichtungen, also solche Anwendungen, die dem Tageslicht ausgesetzt sind, bevorzugt von Gebäudeteilen, Beschichtungen auf (Groß-)Fahrzeugen und Flugzeugen und industriellen Anwendungen, Nutzfahrzeuge im landwirtschaftlichen und Baubereich, Dekolackierungen, Brücken, Gebäuden, Strommasten, Tanks, Containern, Pipelines, Kraftwerken, chemischen Anlagen, Schiffen, Kränen, Pfählen, Spundwänden, Armaturen, Rohren, Fittings, Flanschen, Kupplungen, Hallen, Dächern und Baustahl, Möbeln, Fenstern, Türen, Parkett, Can-Coating und Coil-Coating, für Bodenbeläge, wie bei Parkdecks oder in Krankenhäusern in Automobillacken als OEM und refinish-Anwendung.

In einer bevorzugten Form werden derartige Beschichtungsmassen bei Temperaturen zwischen Umgebungstemperatur bis 80 °C, bevorzugt bis 60 °C, besonders bevorzugt bis 40 °C eingesetzt. Bevorzugt handelt es sich dabei um solche Gegenstände, die nicht bei hohen Temperaturen gehärtet werden können, wie große Maschinen, Flugzeuge, Großraumfahrzeuge und refinish-Anwendungen.

In einer anderen bevorzugten Anwendung wird das Lackgemisch bei 110-150 °C, bevorzugt bei 120-140 °C ausgehärtet (z.B. für OEM-Anwendungen).

Insbesondere werden die erfindungsgemäßen Beschichtungsmassen als Klar-, Basis- und Decklacke(n), Primern und Füllern eingesetzt.

Es stellt einen Vorteil der erfindungsgemäßen Polyisocyanatzusammensetzungen dar, dass sie Polyisocyanatmischungen in Gegenwart von Urethanisierungskatalysatoren über einen langen Zeitraum farbstabil halten.

Es stellt einen weiteren Vorteil der erfindungsgemäßen Polyisocyanatzusammensetzungen dar, dass sie während der Lagerung in Lösungsmitteln bei Exposition gegenüber (Luft-)Feuchtigkeit eine höhere Flockulationsstabilität bei Lagerung aufweisen. Dies trifft auch dann zu, wenn die Polyisocyanatzusammensetzungen keine Lewis-saure organische Metallverbindung enthalten.

Derartige Polyisocyanatzusammensetzungen können als Härter in Lacken, Klebstoffen und Dichtungsmassen eingesetzt werden.

Durch ihre hohe Farbstabilität sind die Polyisocyanatzusammensetzungen insbesondere für Beschichtungsmassen für Klarlacke interessant.
Eine lange Lagerung von Polyisocyanatzusammensetzungen insbesondere bei Endanwendern erfolgt insbesondere für refinish und manche Industrieanwendungen.

### Beispiele

### Einsatzstoffe:

### Polyisocyanate (A): Isocyanurat auf Basis Hexamethylendiisocyanat

Polyisocyanat (A1): Basonat HI 100; Polyisocyanurat der BASF SE. NCO-Gehalt des Produkts: 22,0 %, Viskosität: 2900 mPa*s.
Polyisocyanat (A2): Basonat HI 2000; niedrigviskoses Polyisocyanurat der BASF SE. NCO-Gehalt des Produkts: 23,2 %, Viskosität: 1214 mPa*s
Polyisocyanat (A3), Polyisocyanurat:
   Hexamethylendiisocyanat HDI wurde in Anwesenheit von 70 Gew.ppm Benzyltrimethylammonium-hydroxyisobutyrat als Katalysator bezogen auf Hexamethylendiisocyanat, 60%-ig in Ethylenglycol in einer Dreireaktorkaskade bei 110, 120 und 130 °C umgesetzt. Hexamethylendiisocyanat wurde in einem mehrstufigen Verfahren abdestilliert. NCO-Gehalt des Produkts: 22,2 %, Viskosität: 2900 mPa*s
Polyisocyanat (A4), niedrigviskoses Polyisocyanurat:
   Hexamethylendiisocyanat HDI wurde in Anwesenheit von 34 Gew.ppm Benzyltrimethylammonium-hydroxyisobutyrat als Katalysator bezogen auf Hexamethylendiisocyanat, 60%-ig in Ethylenglycol in einer Dreireaktorkaskade bei 100/120/140 °C umgesetzt. Hexamethylendiisocyanat wurde in einem mehrstufigen Verfahren abdestilliert. Zugabe von 200 Gew.ppm Irganox® 1135 und 200 Gew.ppm Irgafos OPH. NCO-Gehalt des Produkts: 23,1 %, Viskosität: 1320 mPa*s. In den Beispielen werden die Additive in der Auflistung der Stabilisatoren mitgenannt
Polyisocyanat (A5), Polyisocyanurat entsprechend Beispiel A1 der WO 2013060614: Hexamethylendiisocyanat HDI wurde in Anwesenheit von 32 Gew.ppm Benzyltrimethylammonium-hydroxyisobuttersäure als Katalysator bezogen auf Hexamethylendiisocyanat, 5%-ig in Ethylhexanol in einer mehrstufigen Reaktorkaskade mit 20 min mittlerer Durchsatzzeit pro Reaktor bei 120 °C umgesetzt. Die Reaktion wurde chemisch mit 12 Gew.ppm Di-(2-ethyl-hexyl)-phosphat bezogen auf Hexamethylendiisocyanat, 10%-ig gelöst in Methylglykol, gestoppt. Hexamethylendiisocyanat wurde im Vakuum abdestilliert. Zugabe von 300 Gew.ppm Methoxyessigsäure und 100 Gew.ppm BHT. NCO-Gehalt des Produkts: 22,2 %, Farbzahl 21: Hz; Viskosität: 2620 mPa*s.

### Salz B

### Phosphorhaltige acide Verbindungen (B1)

| | |
|---|---|
| Di-(2-ethylhexyl)-phosphat: | DEHP; Produkt der Fa. Lanxess |
| Dibutylphosphat | DBP; Produkt der Fa. Lanxess |
| Hordaphos® MDB | Phosphorsäurebutylester (≥80%; 1-10% n-Butanol) der Fa Clariant |
| Hordaphos® MOB | Phosphorsäurebutylester (≥80%; ≤10% Phosphorsäure) der Fa. Clariant |
| Rhodafac® PA 80 | Mischung aus Dibutyl- und Butylphosphat, 0-1 % Phosphorsäure, 0-4 % Butanol der Fa. Solvay |

Von der Stöchiometrie wurden Äquivalentverhältnisse berechnet. Es entsprechen sich ungefähr 50 Gew.ppm DEHP, 38 Gew.ppm DBP, 28 Gew.ppm Hordaphos® MDB, 28 Gew.ppm Hordaphos® MOB, 33 Gew.ppm Rhodafac® PA 80. Nacure® 4167 wurde üblicherweise bei 200 Gew.ppm mit 25% aktiver Komponenten wie 50 Gew.ppm DEHP gerechnet, auch wenn es nach Herstellerangabe z.T. Monophosphorsäure enthält, und eine Mischung von C6 bis C10 und nicht C8 vorliegt.

### Offenkettige trisubstituierte Amine (B2)

| | |
|---|---|
| Triethylamin | Produkt der Fa. Aldrich |
| N,N-Dimethylcyclohexylamin | Produkt der Fa. Aldrich |
| N,N, Dimethylethanolamin | Produkt der Fa. Aldrich |

### Nicht erfindungsgemäße Amine:

| | |
|---|---|
| Tinuvin® 770: | Bis-(2,2,6,6-tetraamethyl-4-piperidinyl)-sebacat |

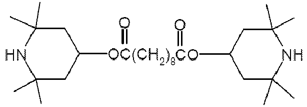

| | |
|---|---|
| Tinuvin® 292: | Mischung von Bis-(1,2,2,6,6-pentamethyl-4-piperidinyl)-sebacat und 1-Methyl-8-(1,2,2,6,6-pentamethyl-4-piperidinyl)-sebacat |

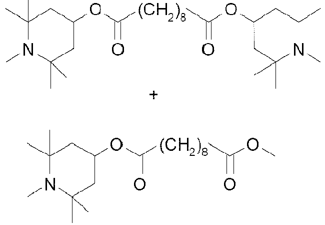

Salz B: Nacure® 4167: Amin neutralisiertes Phosphat der Fa. King Industries / Worlée) in 30-40 % Propan-2-ol, 20-30 % 2-Methylpropan-1-ol. 30-40 % Reaktionsprodukt aus Phosphorsäure, mono- oder di-(C6-C10)alkylester und einem Alkylamin. 25% "aktive" Komponente in Bezug auf Katalyse von Melaminharzen (Phosphorsäureester).

### Sterisch gehinderte Phenole (C):

| | |
|---|---|
| BHT | 2,6-Bis-tert.-butyl-4-methyl-phenol der Fa. Sigma-Aldrich |
| Pentaerythrol, Tetra kis-(3-(3, 5-d i-tert. -butyl-4-hyd roxyphenyl)-propionat) | |
| | Irganox® 1010 (I. 1010) der BASF SE |
| Octadecyl-3-(3,5-di-tert.-butyl-4-hydroxyphenyl)-propionat | |
| | Irganox® 1076 (I. 1076) der BASF SE |
| Isooctyl-3-(3,5-di-tert.-butyl-4-hydroxyphenyl)-propionat | |
| | Irganox® 1135 (I. 1135) der BASF SE |

### Antioxidanzien (D):

| | |
|---|---|
| Triphenylphosphit | Tppt, der Fa. Aldrich |
| Tributylphosphit | TBP, der Fa. Aldrich |
| Dioctylphosphonat | Irgafos® OPH (OPH) der BASF SE |

### Katalysatoren (E):

| | |
|---|---|
| Katalysator: | Dibutylzinndilaurat (DBTL, DBTDL) der Fa. Sigma-Aldrich |

### Lösungsmittel (F):

| | |
|---|---|
| Solvent Naphtha (Siedebereich ca. 170-180 °C): | Solvesso® 100 |
| Methylamylketon | Fa. Aldrich |

### Weiteres Säureadditiv:

| | |
|---|---|
| N. 5076 | Nacure® 5076 (King Industries); Dodecylbenzolsulfonsäure |

Die Polyisocyanate (A) wurden in
Formulierung 1: 50 % Polyisocyanat, 50 % Solvesso® 100. 1000 Gew.ppm DBTL/Solvesso® 100
Formulierung 2: 50 % Polyisocyanat, 50 % Methylamylketon. 1000 Gew.ppm DBTL/ Methylamylketon
   mit den in den Versuchen angegebenen Konzentrationen der Komponenten (B) - (D) in 25 mL in fest verschlossenen Schraubdeckelgefäßen mit einem Volumen von 30 mL bei 50 °C im Umluftofen zum Ausschluss von Luft unter Stickstoff gelagert. Spuren von Luft sind nicht ausgeschlossen. Nach einer Messung wurde die Messlösung in das Schraubdeckelgefäß zurückgegossen, die Lösung mit Stickstoff überstellt und das Schraubdeckelgefäß sorgfältig verschlossen.

Die Gew.-%-Angaben der Komponenten (A) und (F) beziehen sich auf 100 % Gesamtgewicht bezogen auf Polyisocyanat (A) und Lösungsmittel (F). Die Konzentrationen der Verbindungen (B) bis (E) in Gew.ppm beziehen sich im jeweils unverdünnten Zustand der Verbindungen (B) bis (E) auf die Gesamtmenge Polyisocyanat (A). In den Tabellen sind die Mengen der Additive in Gew.ppm angegeben.

Die Farbzahlmessung erfolgt in APHA nach DIN EN 1557 auf einem Lico 150 der Firma Lange in einer 5 cm Messküvette mit einem Volumen von 5 mL. Die Fehlertoleranzen betragen für den Sollwert 20 Hz (+/- 5, Ist-Wert 18 Hz); Sollwert 102 Hz (+/- 10, Ist-Wert 99 Hz); Sollwert 202 Hz (+/- 20, Ist-Wert 197 Hz). Die Farbzahlen werden direkt (unmittelbar vor Beginn der Lagerung), und nach Lagerung über unterschiedliche Zeiträume gemessen.

Beispiele "B" (hier nicht Komponente B) wurden unmittelbar gegen Referenzen "R" verglichen.

Wechselwirkung von Lewis-Säure DBTL mit Additiven:
Eine Mischung von 5 Gew.-% DBTL und 5 Gew.-% DEHP ohne Amin in Butylacetat ergab sofort eine sehr hohe Menge an weißem Niederschlag (fast 100% der Füllhöhe). Auch mit 5 % DBTL und 0,5% DEHP bzw. mit 0,5% DBTL und 0,05 % DEHP gab es interimsmäßig einen Niederschlag, der sich erst nach Stunden auflöste. Es ist von einer nachteiligen Wechselwirkung von DEHP mit DBTL auszugehen, eventuell auch mit Lacktrübung.

Eine Mischung von 5 Gew.-% DBTL und 5 Gew.-% DEHP und 1,8 % Triethylamin als erfindungsgemäßem Ammoniumphosphat in Butylacetat ergab ca. ein Viertel des Niederschlags als mit DBTL/DEHP. In den geringeren Konzentrationen mit 5 % DBTL, 0,5% DEHP und 0,18% Triethylamin, bzw. mit 0,5% DBTL, 0,05 % DEHP und 0,018 % Triethylamin löste sich ein Niederschlag nach der Zusammengabe deutlich schneller auf. Es wird von keiner nachteiligen, zumindest deutlich geringeren Wechselwirkung von erfindungsgemäßem Ammoniumphosphat mit DBTL ausgegangen.

### Lagerversuche:

**Tabelle 1: Polyisocyanat (A5) mit Stabilisatoren in Formulierung 1 (Solvesso® 100)**

| | Stabilisatoren (ppm/A5) | | | Lagerzeit (d) | | | |
|---|---|---|---|---|---|---|---|
| | B | Säure | C | 0 | 7 | 28 | 70 |
| R1 | | 10 N. 5076*1 | 100 BHT | 9 | 15 | 55 | 84 |
| B1 | 200 Nacure® 4167 | | 100 BHT | 9 | 15 | 16 | 21 |

| | | | | | | | |
|---|---|---|---|---|---|---|---|
| *1: Bsp. 2, PIC A1 der WO 2013060614 Bei Zugabe erfindungsgemäßer Salze (B) gegenüber einem Stand der Technik mit freien Säuren werden bessere Farbdrifts erhalten | | | | | | | |

**Tabelle 2: Polyisocyanat (A3) mit Stabilisatoren in Formulierung 1 (Solvesso® 100)**

| | Stabilisatoren (ppm/A3) | | | Lagerzeit (d) | | | |
|---|---|---|---|---|---|---|---|
| | B | Säure | C | 0 | 7 | 28 | 70 |
| R2*1 | | 50 DEHP | 100 I. 1135 | 15 | 27 | 35 | 66 |
| B2 | 200 Nacure® 4167 | 50 DEHP | 100 I. 1135 | 15 | 26 | 28 | 35 |

| | | | | | | | |
|---|---|---|---|---|---|---|---|
| *1: Bsp. 6, PIC A2 der WO 2013060614 Bei Zugabe eines erfindungsgemäßen Salzes (B) gegenüber einem Stand der Technik mit freien Säuren wird ein besserer Farbdrift beobachtet | | | | | | | |

**Tabelle 3: Polyisocyanat (A1) mit Stabilisatoren in Formulierung 1 (Solvesso® 100)**

| | Stabilisatoren (ppm/A1) | | | Lagerzeit (d) | | | |
|---|---|---|---|---|---|---|---|
| | B | C | D | 0 | 7 | 28 | 70 |
| R3 | | 200 I. 1010 | 200 Tppt | 10 | 52 | 55 | 86 |
| B3 | 200 Nacure® 4167 | 200 I. 1010 | 200 Tppt | 10 | 22 | 30 | 46 |
| B4 | 300 Nacure® 4167 | 200 I. 1010 | 200 Tppt | 10 | 24 | 28 | 38 |
| R4 | | 200 I. 1010 | 200 OPH | 8 | 63 | 130 | X |
| B5 | 200 Nacure® 4167 | 200 I. 1010 | 200 OPH | 8 | 30 | 40 | 57 |
| R5 | | 200 I. 1076 | 200 Tppt | 8 | 43 | 63 | 94 |
| B6 | 200 Nacure® 4167 | 200 I. 1076 | 200 Tppt | 8 | 21 | 30 | 54 |
| B7 | 300 Nacure® 4167 | 200 I. 1076 | 200 Tppt | 8 | 21 | 28 | 41 |
| R6 | | 200 I. 1135 | 200 Tppt | 8 | 46 | 51 | 100 |
| B8 | 200 Nacure® 4167 | 200 I. 1135 | 200 Tppt | 8 | 22 | 29 | 42 |
| B9 | 300 Nacure® 4167 | 200 I. 1135 | 200 Tppt | 8 | 21 | 23 | 39 |
| R7 | | 200 I. 1135 | 200 TBP | 9 | 49 | 52 | 89 |
| B10 | 200 Nacure® 4167 | 200 I. 1135 | 200 TBP | 9 | 21 | 29 | 47 |
| B11 | 300 Nacure® 4167 | 200 I. 1135 | 200 TBP | 9 | 29 | 27 | 37 |

| | | | | | | | |
|---|---|---|---|---|---|---|---|
| Nacure® 4167 verbessert den Farbdrift gegenüber Mustern ohne Nacure® 4167 | | | | | | | |

**Tabelle 4: Polyisocyanat (A2) in Formulierung 1 (Solvesso® 100)**

| | Stabilisatoren (ppm/A2) | | | Lagerzeit (d) | | | |
|---|---|---|---|---|---|---|---|
| | Phosphat bzw. Ammoniumphosphat | C | D | 0 | 7 | 28 | 70 |
| R8 | | 200 I. 1135 | 200 OPH | 12 | 66 | 135 | 100 |
| R9 | 38 DBP | 200 I. 1135 | 200 OPH | 12 | 50 | 143 | 166 |
| B12 | 200 Nacure® 4167 | 200 I. 1135 | 200 OPH | 12 | 22 | 43 | 46 |

| | | | | | | | |
|---|---|---|---|---|---|---|---|
| Nacure® 4167 verbessert den Farbdrift gegenüber einem Muster ohne Salz (B) und gegenüber einem Muster mit einer Säure anstelle des Salzes (B). | | | | | | | |

**Tabelle 5: Polyisocyanat (A1) unter Zugabe von Säuren (Referenz) und Säuren + Aminen (Beispiel) in Formulierung 1 (Solvesso® 100)**

| | Stabilisatoren (ppm/A1) | | | Lagerzeit (d) | | | |
|---|---|---|---|---|---|---|---|
| | Phosphat bzw. Ammoniumphosphat | C | D | 0 | 7 | 28 | 70 |
| R10 | 50 DEHP | 200 I. 1135 | 200 OPH | 8 | 32 | 90 | 135 |
| R11 | 50 DEHP + 50 Tinuvin® 292* | 200 I. 1135 | 200 OPH | 8 | 32 | 90 | 134 |
| R12 | 50 DEHP + 44 Tinuvin® 770* | 200 I. 1135 | 200 OPH | 8 | 31 | 92 | 140 |
| B13 | 50 DEHP + 18 Triethylamin* | 200 I. 1135 | 200 OPH | 8 | 26 | 35 | 42 |
| B14 | 57 DEHP + 18 Triethylamin | 200 I. 1135 | 200 OPH | 11 | 21 | 34 | 45 |
| B15 | 50 DEHP + 23 Dimethylcyclohexylamin* | 200 I. 1135 | 200 OPH | 8 | 23 | 31 | 48 |
| B16 | 57 DEHP + 16 Dimethylethanolamin | 200 I. 1135 | 200 OPH | 11 | 25 | 42 | 51 |
| R13 | 28 Hordaphos® MOB | 200 I. 1135 | 200 OPH | 8 | 25 | 63 | 127 |
| R14 | 28 Hordaphos® MOB + 50 Tinuvin® 292 | 200 I. 1135 | 200 OPH | 9 | 25 | 62 | 119 |
| R15 | 28 Hordaphos® MOB + 44 Tinuvin® 770 | 200 I. 1135 | 200 OPH | 9 | 25 | 62 | 126 |
| B17 | 28 Hordaphos® MOB + 18 Triethylamin | 200 I. 1135 | 200 OPH | 9 | 23 | 30 | 39 |
| B18 | 28 Hordaphos® MOB + 23 Dimethylcyclohexylamin | 200 I. 1135 | 200 OPH | 9 | 20 | 28 | 38 |
| R16 | 33 Rhodafac® PA80 | 200 I. 1135 | 200 OPH | 8 | 36 | 111 | 213 |
| R17 | 33 Rhodafac® PA80 + 50 Tinuvin® 292 | 200 I. 1135 | 200 OPH | 9 | 29 | 84 | 154 |
| R18 | 33 Rhodafac® PA80 + 44 Tinuvin® 770 | 200 I. 1135 | 200 OPH | 9 | 34 | 87 | 160 |
| B19 | 33 Rhodafac® PA80 + 18 Triethylamin | 200 I. 1135 | 200 OPH | 9 | 23 | 33 | 37 |
| B20 | 33 Rhodafac® PA80 + 23 Dimethylcyclohexylamin | 200 I. 1135 | 200 OPH | 9 | 22 | 32 | 40 |

| | | | | | | | |
|---|---|---|---|---|---|---|---|
| * Ca. 14 % stöchiometrischer Überschuss Amin. Ansonsten sind Säuren und Amine äquimolar Die Zugabe von Amin (B2) zu Säuren (B1) verbessert den Farbdrift. | | | | | | | |

**Tabelle 6: Polyisocyanat (A3) mit Zugabe von Ammoniumphosphat in Formulierung 1 (Solvesso® 100)**

| | Stabilisatoren (ppm/A3) | | | Lagerzeit (d) | | | |
|---|---|---|---|---|---|---|---|
| | B | C | D | 0 | 7 | 28 | 70 |
| R19 | | 200 I. 1010 | 200 OPH | 11 | 83 | 63 | 359 |
| B21 | 300 Nacure® 4167 | 200 I. 1010 | 200 OPH | 11 | 21 | 27 | 58 |
| R20 | | 200 I. 1135 | 200 Tppt | 12 | 51 | 69 | 242 |
| B22 | 300 Nacure® 4167 | 200 I. 1135 | 200 Tppt | 12 | 25 | 36 | 63 |

| | | | | | | | |
|---|---|---|---|---|---|---|---|
| Die Beispiele mit Salz (B) sind besser als die ohne. | | | | | | | |

**Tabelle 7: Polyisocyanat (A4) mit Zugabe von Ammoniumphosphat in Formulierung 1 (Solvesso® 100)**

| | Stabilisatoren (ppm/A4) | | | Lagerzeit (d) | | | |
|---|---|---|---|---|---|---|---|
| | B | C | D | 0 | 7 | 28 | 70 |
| R21 | | 200 I. 1135 | 200 OPH | 13 | 75 | 103 | 173 |
| B23 | 300 Nacure® 4167 | 200 I. 1135 | 200 OPH | 13 | 18 | 20 | 18 |

| | | | | | | | |
|---|---|---|---|---|---|---|---|
| Das Beispiel mit Salz (B) ist besser als das ohne. | | | | | | | |

**Tabelle 8: Polyisocyanat (A1) mit Zugabe von Ammoniumphosphat in Formulierung 2 (Methylamylketon)**

| | Stabilisatoren (ppm/A1) | | | Lagerzeit (d) | | | |
|---|---|---|---|---|---|---|---|
| | Phosphat bzw. Ammoniumphosphat | C | D | 0 | 7 | 28 | 70 |
| R22 | | 200 I. 1010 | 200 Tppt | 11 | 26 | 41 | 86 |
| B24 | 200 Nacure® 4167 | 200 I. 1010 | 200 Tppt | 11 | 18 | 20 | 44 |
| B25 | 300 Nacure® 4167 | 200 I. 1010 | 200 Tppt | 11 | 18 | 21 | 33 |
| R23 | | 200 I. 1010 | 200 I. OPH | 10 | 21 | 31 | 54 |
| B26 | 200 Nacure® 4167 | 200 I. 1010 | 200 I. OPH | 10 | 20 | 23 | 34 |
| B27 | 300 Nacure® 4167 | 200 I. 1010 | 200 I. OPH | 10 | 21 | 22 | 37 |
| R24 | | 200 I. 1076 | 200 I. OPH | 9 | 21 | 33 | 72 |
| B28 | 200 Nacure® 4167 | 200 I. 1076 | 200 I. OPH | 9 | 21 | 24 | 38 |
| B29 | 300 Nacure® 4167 | 200 I. 1076 | 200 I. OPH | 9 | 22 | 24 | 49 |
| R25 | | 200 I. 1076 | 200 Tppt | 9 | 23 | 34 | 84 |
| B30 | 200 Nacure® 4167 | 200 I. 1076 | 200 Tppt | 9 | 17 | 19 | 34 |
| B31 | 300 Nacure® 4167 | 200 I. 1076 | 200 Tppt | 9 | 24 | 16 | 37 |
| R26 | | 200 I. 1135 | 200 I. OPH | 12 | 28 | 39 | 70 |
| R27 | 200 DEHP | 200 I. 1135 | 200 I. OPH | 11 | 20 | 32 | 70 |
| B32 | 300 Nacure® 4167 | 200 I. 1135 | 200 I. OPH | 11 | 20 | 28 | 36 |
| R28 | | 200 I. 1135 | 200 Tppt | 10 | 26 | 42 | 87 |
| B33 | 200 Nacure® 4167 | 200 I. 1135 | 200 Tppt | 10 | 19 | 22 | 35 |
| B34 | 300 Nacure® 4167 | 200 I. 1135 | 200 Tppt | 10 | 19 | 20 | 38 |
| R29 | | 200 I. 1135 | 200 TBP | 10 | 25 | 43 | 88 |
| B35 | 200 Nacure® 4167 | 200 I. 1135 | 200 TBP | 10 | 19 | 21 | 30 |
| B36 | 300 Nacure® 4167 | 200 I. 1135 | 200 TBP | 10 | 18 | 16 | 29 |

| | | | | | | | |
|---|---|---|---|---|---|---|---|
| Die Beispiele mit Salz (B) sind besser als die ohne. | | | | | | | |

**Tabelle 9: Polyisocyanat (A3) mit Zugabe von Ammoniumphosphat in Formulierung 2 (Methylamylketon)**

| | Stabilisatoren (ppm/A3) | | | Lagerzeit (d) | | | |
|---|---|---|---|---|---|---|---|
| | B | C | D | 0 | 7 | 28 | 70 |
| R30 | | 200 I. 1135 | 200 Tppt | 17 | 19 | 56 | 112 |
| B37 | 300 Nacure® 4167 | 200 I. 1135 | 200 Tppt | 17 | 16 | 25 | 50 |
| R31 | | 200 I. 1135 | 200 TBP | 17 | 27 | 66 | 141 |
| B38 | 300 Nacure® 4167 | 200 I. 1135 | 200 TBP | 18 | 16 | 20 | 38 |
| R32 | | 200 I. 1010 | 200 Tppt | 20 | 15 | 58 | 108 |
| B39 | 300 Nacure® 4167 | 200 I. 1010 | 200 Tppt | 20 | 24 | 22 | 39 |
| R33 | | 200 I. 1010 | 200 OPH | 20 | 19 | 43 | 111 |
| B40 | 300 Nacure® 4167 | 200 I. 1010 | 200 OPH | 20 | 24 | 31 | 44 |
| R34 | | 200 I. 1076 | 200 OPH | 20 | 22 | 51 | 95 |
| B41 | 300 Nacure® 4167 | 200 I. 1076 | 200 OPH | 20 | 22 | 25 | 39 |
| R35 | | 200 I. 1076 | 200 Tppt | 19 | 21 | 62 | 112 |
| B42 | 300 Nacure® 4167 | 200 I. 1076 | 200 Tppt | 19 | 18 | 25 | 45 |

| | | | | | | | |
|---|---|---|---|---|---|---|---|
| Die Beispiele mit Salz (B) sind besser als die ohne. | | | | | | | |

Bei anwendungstechnischen Versuchen wurden keine Nachteile von Lacken, z.B. von Polyisocyanat / Polyacrylat oder Polyisocyanat / Polyacrylat / Polyester gefunden, z.B. in Trocknung, Pendelhärteentwicklung, Kratzfestigkeit, Etch-Beständigkeiten, Gitterschnitt, Erichsen-Tiefung oder Bewitterung.

## Patentansprüche

1. Polyisocyanatzusammensetzungen, enthaltend
- (A) mindestens ein Polyisocyanat, erhältlich durch Umsetzung mindestens eines monomeren Isocyanats,
- (B) mindestens ein Salz in einer Menge von 10 bis 300 Gew.ppm bezogen auf Komponente (A) bestehend aus einer (B1) phosphorhaltigen aciden Verbindung und (B2) einem offenkettigen trisubstituierten Amin,
- (C) mindestens ein sterisch gehindertes Phenol,
- (D) optional mindestens ein weiteres Antioxidanz,
- (E) mindestens eine Lewis-saure organische Metallverbindung, die die Umsetzung von Isocyanatgruppen mit gegenüber Isocyanat reaktiven Gruppen zu beschleunigen vermag,
- (F) mindestens ein Lösungsmittel,
- (G) gegebenenfalls andere lacktypische Additive.

2. Polyisocyanatzusammensetzungen gemäß Anspruch 1, **dadurch gekennzeichnet, dass** es sich bei dem monomeren Isocyanat um ein Diisocyanat handelt, ausgewählt aus der Gruppe bestehend aus 1,6-Hexamethylendiisocyanat, 1,5-Pentamethylendiisocyanat, Isophorondiisocyanat, 1,3-Bis(isocyanatomethyl)cyclo-hexan, 4,4'-Di(isocyanatocyclohexyl)methan und 2,4'-Di(isocyanatocyclohexyl)methan.

3. Polyisocyanatzusammensetzungen gemäß Anspruch 1 oder 2, **dadurch gekennzeichnet, dass** das Polyisocyanat (A) Isocyanurat-, Biuret-, Urethan-, Allophanatgruppen und/oder Iminooxadiazindiongruppen aufweist.

4. Polyisocyanatzusammensetzungen gemäß einem der vorhergehenden Ansprüche, **dadurch gekennzeichnet, dass** das Polyisocyanat (A) Isocyanurat-, Allophanat- und/oder Urethan-Gruppen enthält, die unter Verwendung eines Ammoniumcarboxylat-, Ammoniumhydroxid- oder Ammonium α-hydroxycarboxylat-Katalysators hergestellt wurden.

5. Polyisocyanatzusammensetzungen gemäß einem der vorhergehenden Ansprüche, **dadurch gekennzeichnet, dass** es sich bei dem Polyisocyanat (A) um ein vornehmlich Isocyanuratgruppen enthaltendes Polyisocyanat, mit einer Viskosität von 500-4000 mPa*s, und/oder ein niederviskoses Allophanat gegebenenfalls enthaltend Isocyanurat und/oder Urethan, mit einer Viskosität von 150-1600 mPa*s handelt.

6. Polyisocyanatzusammensetzungen gemäß einem der vorhergehenden Ansprüche, **dadurch gekennzeichnet, dass** die phosphorhaltige acide Verbindung (B1) ausgewählt ist aus der Gruppe bestehend aus Alkylphosphaten (B1a), Phosphonaten (B1b) und Mono-O-Alkyl-Phosphoniten (B1c).

7. Polyisocyanatzusammensetzungen gemäß einem der vorhergehenden Ansprüche, **dadurch gekennzeichnet, dass** die phosphorhaltige acide Verbindung (B1) eine der allgemeinen Formeln (I) bis (V) 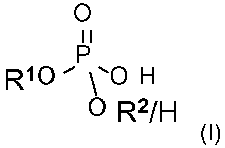 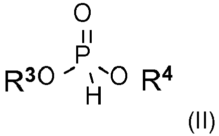 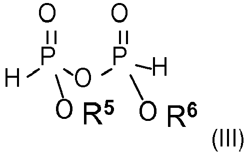 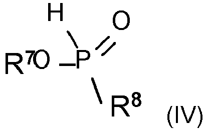 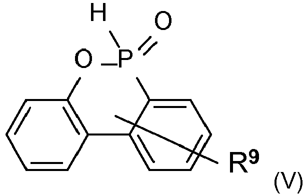 aufweist,
in welchen R1 bis R9 unabhängig voneinander jeweils Alkyl ist, bevorzugt C4 bis C8 Alkyl.

8. Polyisocyanatzusammensetzungen gemäß einem der vorhergehenden Ansprüche, **dadurch gekennzeichnet, dass** das offenkettige trisubstituierte Amin (B2) ein Trialkylamin, bevorzugt ein Trialkylamin ausgewählt aus der Gruppe Triethylamin, N,N-Dimethylcyclohexylamin und N,N-Dimethyl-ethanolamin ist.

9. Polyisocyanatzusammensetzungen gemäß einem der vorhergehenden Ansprüche, **dadurch gekennzeichnet, dass** das offenkettige trisubstituierte Amin (B2) eine erste korrespondierende Säure aufweist, deren pKs-Wert in wässriger Lösung zwischen 5 und 14 (25 °C), besonders bevorzugt zwischen 8,5 und 12, ganz besonders bevorzugt zwischen 9,5 und 11,0 liegt.

10. Polyisocyanatzusammensetzungen gemäß einem der vorhergehenden Ansprüche, **dadurch gekennzeichnet, dass** die phosphorhaltige acide Verbindung (B1) und das offenkettige trisubstituierte Amin (B2) im Molverhältnis von 1,2:0,8 bis 0,5:1,5, bevorzugt von 1:1 bis 0,8:1,2, besonders bevorzugt stöchiometrisch eingesetzt werden.

11. Polyisocyanatzusammensetzungen gemäß einem der vorhergehenden Ansprüche, **dadurch gekennzeichnet, dass** Verbindung (C) pro aromatischem Ring genau eine phenolische Hydroxygruppe aufweist und in der mindestens eine, bevorzugt beide ortho-Positionen bezogen auf die phenolische Hydroxygruppe eine gegebenenfalls substituierte tert.-Butyl-Gruppe trägt.

12. Polyisocyanatzusammensetzungen gemäß einem der vorhergehenden Ansprüche, **dadurch gekennzeichnet, dass** Verbindung (C) ausgewählt ist aus der Gruppe bestehend aus 2,6-Bis-tert.-butyl-4-methyl-phenol (BHT), einem 3-[3,5-di-tert.-butyl-4-hydroxyphenyl]-propionsäurealkylester, bevorzugt Pentaerythrit-tetrakis(3-(3,5-di-tert.-butyl-4-hydroxyphenyl)propionat), 3,3',3",5,5',5"-Hexa-tert.-butyl-a,a',a"-(mesitylen-2,4,6-triyl)tri-p-kresol, 1,3,5-Tris(3,5-di-tert.-butyl-4-hydroxybenzyl)-1,3,5-triazin-2,4,6(1H,3H,5H)-trion, Octyl-3-(3,5-di-tert.-butyl-4-hydroxyphenyl)-propionat, C7-C9-Alkyl-3-(3,5-di-tert.-butyl-4-hydroxyphenyl)-propionat und Octadecyl-3-(3,5-di-tert.-butyl-4-hydroxyphenyl)-propionat.

13. Polyisocyanatzusammensetzungen gemäß einem der vorhergehenden Ansprüche, **dadurch gekennzeichnet, dass** das weitere Antioxidanz (D) ausgewählt ist aus der Gruppe der Phosphite, Phosphonite, Phosphonate und Thioether.

14. Polyisocyanatzusammensetzungen einem der vorhergehenden Ansprüche, **dadurch gekennzeichnet, dass** die Lewis-saure organische Metallverbindung (E) ein Metall enthält, ausgewählt aus der Gruppe bestehend aus Zinn, Zink, Titan, Zirkon, und Wismut, oder Mischungen solcher Verbindungen.

15. Polyisocyanatzusammensetzungen gemäß einem der vorstehenden Ansprüche, **dadurch gekennzeichnet, dass** das Lösungsmittel (F) ausgewählt ist aus der Gruppe bestehend aus aromatischen Kohlenwasserstoffen, (cyclo)aliphatischen Kohlenwasserstoffen, Ketonen, Estern, Ether, Etherestern und Carbonaten, insbesondere aus Destillationsschnitten aromatischer Kohlenwasserstoffe mit überwiegend Cg und C₁₀-Aromaten, und aus Dialkylketonen.

16. Verfahren zur Stabilisierung von Polyisocyanatzusammensetzungen, die neben Polyisocyanat (A) mindestens eine Lewis-saure organische Metallverbindung (E) enthalten, die die Umsetzung von Isocyanatgruppen mit gegenüber Isocyanat reaktiven Gruppen zu beschleunigen vermag, **dadurch gekennzeichnet, dass** man der Polyisocyanatzusammensetzung zusätzlich mindestens ein Salz (B) in einer Menge von 10 bis 300 Gew.ppm bezogen auf das Polyisocyanat (A) bestehend aus einer phosphorhaltigen aciden Verbindung (B1) und einem offenkettigen trisubstituierten Amin (B2), sowie mindestens ein sterisch gehindertes Phenol (C), optional mindestens ein weiteres Antioxidanz (D), mindestens ein Lösungsmittel (F), und gegebenenfalls andere lacktypische Additive (G) beimengt.

17. Verfahren zur Herstellung von Polyurethanlacken, **dadurch gekennzeichnet, dass** man eine Polyisocyanatzusammensetzung gemäß einem der Ansprüche 1 bis 15 mit mindestens einem Bindemittel umsetzt, welches gegenüber Isocyanat reaktive Gruppen enthält.

18. Verfahren zur Herstellung von Polyurethanlacken, **dadurch gekennzeichnet, dass** man eine Polyisocyanatzusammensetzung gemäß einem der Ansprüche 1 bis 15 mit mindestens einem Bindemittel ausgewählt aus der Gruppe bestehend aus Polyacrylatpolyolen, Polyesterpolyolen, Polyetherpolyolen, Polyurethanpolyolen, Polyharnstoffpolyolen, Polyetherolen, Polycarbonaten, Polyesterpolyacrylatpolyolen, Polyesterpolyurethanpolyolen, Polyurethanpolyacrylatpolyolen, Polyurethanmodifizierten Alkydharzen, Fettsäuremodifizierten Polyesterpolyurethanpolyolen, Kopolymerisaten mit Allylethern und Co- bzw. Pfropfpolymerisaten aus den genannten Stoffgruppen umsetzt.

19. Verwendung von Polyisocyanatzusammensetzungen gemäß einem der Ansprüche 1 bis 15 als Härter in Beschichtungsmitteln in Grundierungen, Füllern, pigmentierten Decklacken, Basislacken und Klarlacken im Bereich refinish, Autoreparatur-, Großfahrzeug- und Holz- Kunststoff-und OEM-Lackierung, bei Nutzfahrzeugen im landwirtschaftlichen und Baubereich sowie als Härter in Klebstoffen und Dichtungsmassen.

## Claims

1. A polyisocyanate composition comprising
- (A) at least one polyisocyanate obtainable by reacting at least one monomeric isocyanate,
- (B) at least one salt in an amount of 10 to 300 ppm by weight, based on component (A), consisting of (B1) a phosphorus-containing acidic compound and (B2) an open-chain trisubstituted amine,
- (C) at least one sterically hindered phenol,
- (D) optionally at least one further antioxidant,
- (E) at least one Lewis-acidic organic metal compound capable of accelerating the reaction of isocyanate groups with isocyanate-reactive groups,
- (F) at least one solvent,
- (G) optionally other coatings additives.

2. The polyisocyanate composition according to claim 1, wherein the monomeric isocyanate is a diisocyanate selected from the group consisting of hexamethylene 1,6-diisocyanate, pentamethylene 1,5-diisocyanate, isophorone diisocyanate, 1,3-bis(isocyanatomethyl)cyclohexane, 4,4'-di(isocyanatocyclohexyl)methane and 2,4'-di(isocyanatocyclohexyl)methane.

3. The polyisocyanate composition according to claim 1 or 2, wherein the polyisocyanate (A) has isocyanurate groups, biuret groups, urethane groups, allophanate groups and/or iminooxadiazinedione groups.

4. The polyisocyanate composition according to any of the preceding claims, wherein the polyisocyanate (A) comprises isocyanurate, allophanate and/or urethane groups that have been prepared using an ammonium carboxylate, ammonium hydroxide or ammonium α-hydroxycarboxylate catalyst.

5. The polyisocyanate composition according to any of the preceding claims, wherein the polyisocyanate (A) is a polyisocyanate comprising primarily isocyanurate groups and having a viscosity of 500-4000 mPa*s and/or a low-viscosity allophanate optionally comprising isocyanurate and/or urethane and having a viscosity of 150-1600 mPa*s.

6. The polyisocyanate composition according to any of the preceding claims, wherein the phosphorus-containing acidic compound (B1) is selected from the group consisting of alkyl phosphates (B1a), phosphonates (B1b) and mono-O-alkyl phosphonites (B1c).

7. The polyisocyanate composition according to any of the preceding claims, wherein the phosphorus-containing acidic compound (B1) has one of the general formulae (I) to (V) 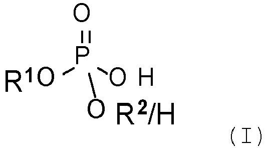 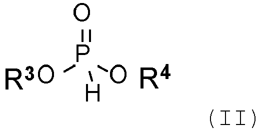 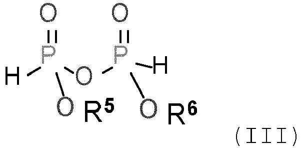 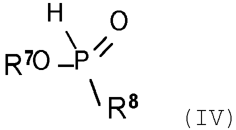 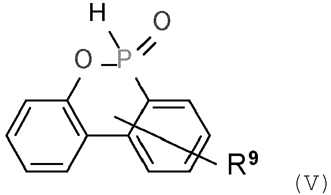 in which R1 to R9 is in each case independently alkyl, preferably C4 to C8 alkyl.

8. The polyisocyanate composition according to any of the preceding claims, wherein the open-chain trisubstituted amine (B2) is a trialkylamine, preferably a trialkylamine selected from the group consisting of triethylamine, N,N-dimethylcyclohexylamine and N,N-dimethylethanolamine.

9. The polyisocyanate composition according to any of the preceding claims, wherein the open-chain trisubstituted amine (B2) includes a first corresponding acid having a pKa in aqueous solution between 5 and 14 (25°C) more preferably between 8.5 and 12, most preferably between 9.5 and 11.0.

10. The polyisocyanate composition according to any of the preceding claims, wherein the phosphorus-containing acidic compound (B1) and the open-chain trisubstituted amine (B2) are used in a molar ratio of 1.2:0.8 to 0.5:1.5, preferably of 1:1 to 0.8:1.2, more preferably stoichiometrically.

11. The polyisocyanate composition according to any of the preceding claims, wherein compound (C) has exactly one phenolic hydroxyl group per aromatic ring and in which at least one ortho position, preferably both ortho positions, based on the phenolic hydroxyl group, bear(s) an optionally substituted tert-butyl group.

12. The polyisocyanate composition according to any of the preceding claims, wherein compound (C) is selected from the group consisting of 2,6-bis(tert-butyl)-4-methylphenol (BHT), an alkyl 3-[3,5-di-tert-butyl-4-hydroxyphenyl] propionate, preferably pentaerythritol tetrakis(3-(3,5-di-tert-butyl-4-hydroxyphenyl)propionate), 3,3',3",5,5',5"-hexa(tert-butyl)-α,α',α"-(mesitylene-2,4,6-triyl)tri-p-cresol, 1,3,5-tris(3,5-di-tert-butyl-4-hydroxybenzyl)-1,3,5-triazine-2,4,6(1H,3H,5H)-trione, octyl 3-(3,5-di-tert-butyl-4-hydroxyphenyl)propionate, C7-C9-alkyl 3-(3,5-di-tert-butyl-4-hydroxyphenyl)propionate and octadecyl 3-(3,5-di-tert-butyl-4-hydroxyphenyl) propionate.

13. The polyisocyanate composition according to any of the preceding claims, wherein the further antioxidant (D) is selected from the group of the phosphites, phosphonites, phosphonates and thioethers.

14. The polyisocyanate composition according to any of the preceding claims, wherein the Lewis-acidic organic metal compound (E) comprises a metal selected from the group consisting of tin, zinc, titanium, zirconium and bismuth, or mixtures of such compounds.

15. The polyisocyanate composition according to any of the preceding claims, wherein the solvent (F) is selected from the group consisting of aromatic hydrocarbons, (cyclo)aliphatic hydrocarbons, ketones, esters, ethers, ether esters and carbonates, especially from distillation cuts of aromatic hydrocarbons comprising predominantly C₉ and C₁₀ aromatics, and from dialkyl ketones.

16. A process for stabilizing polyisocyanate compositions comprising, as well as polyisocyanate (A), at least one Lewis-acidic organic metal compound (E) capable of accelerating the reaction of isocyanate groups with isocyanate-reactive groups, wherein at least one salt (B) in an amount of 10 to 300 ppm by weight based on the polyisocyanate (A), consisting of a phosphorus-containing acidic compound (B1) and an open-chain trisubstituted amine (B2), and at least one sterically hindered phenol (C), optionally at least one further antioxidant (D), at least one solvent (F) and optionally other coatings additives (G) are additionally added to the polyisocyanate composition.

17. A process for producing polyurethane coatings, which comprises reacting a polyisocyanate composition according to any of claims 1 to 15 with at least one binder comprising isocyanate-reactive groups.

18. A process for producing polyurethane coatings, which comprises reacting a polyisocyanate composition according to any of claims 1 to 15 with at least one binder selected from the group consisting of polyacrylate polyols, polyester polyols, polyether polyols, polyurethane polyols, polyurea polyols, polyetherols, polycarbonates, polyester polyacrylate polyols, polyester polyurethane polyols, polyurethane polyacrylate polyols, polyurethane-modified alkyd resins, fatty acid-modified polyester polyurethane polyols, copolymers with allyl ethers and copolymers or graft polymers from the substance groups mentioned.

19. The use of polyisocyanate compositions according to any of claims 1 to 15 as curing agent in coating materials in primers, primer surfacers, pigmented topcoats, basecoats and clearcoats in the sectors of refinishing, automotive refinishing, large vehicle finishing and wood, plastic and OEM finishing, in utility vehicles in the agricultural and construction sector and as curing agent in adhesives and sealants.

## Revendications

1. Compositions de polyisocyanate, contenant :
- (A) au moins un polyisocyanate, pouvant être obtenu par mise en réaction d'au moins un isocyanate monomère,
- (B) au moins un sel en une quantité de 10 à 300 ppm en poids par rapport au composant (A), constitué par (B1) un composé acide contenant du phosphore et (B2) une amine trisubstituée à chaîne ouverte,
- (C) au moins un phénol à encombrement stérique,
- (D) éventuellement au moins un antioxydant supplémentaire,
- (E) au moins un composé métallique organique acide de Lewis, qui peut accélérer la réaction de groupes isocyanate avec des groupes réactifs avec les isocyanates,
- (F) au moins un solvant,
- (G) éventuellement d'autres additifs typiques des vernis.

2. Compositions de polyisocyanate selon la revendication 1, **caractérisées en ce que** l'isocyanate monomère consiste en un diisocyanate, choisi dans le groupe constitué par le diisocyanate de 1,6-hexaméthylène, le diisocyanate de 1,5-pentaméthylène, le diisocyanate d'isophorone, le 1,3-bis(isocyanatométhyl)cyclohexane, le 4,4'-di(isocyanatocyclohexyl)méthane et le 2,4'-di(isocyanatocyclohexyl)méthane.

3. Compositions de polyisocyanate selon la revendication 1 ou 2, **caractérisées en ce que** le polyisocyanate (A) comprend des groupes isocyanurate, biuret, uréthane, allophanate et/ou des groupes iminooxadiazine-dione.

4. Compositions de polyisocyanate selon l'une quelconque des revendications précédentes, **caractérisées en ce que** le polyisocyanate (A) contient des groupes isocyanurate, allophanate et/ou uréthane, qui ont été fabriqués en utilisant un catalyseur carboxylate d'ammonium, hydroxyde d'ammonium ou α-hydroxycarboxylate d'ammonium.

5. Compositions de polyisocyanate selon l'une quelconque des revendications précédentes, **caractérisées en ce que** le polyisocyanate (A) consiste en un polyisocyanate contenant principalement des groupes isocyanurate, ayant une viscosité de 500 à 4 000 mPa*s, et/ou un allophanate faiblement visqueux contenant éventuellement de l'isocyanurate et/ou de l'uréthane, ayant une viscosité de 150 à 1 600 mPa*s.

6. Compositions de polyisocyanate selon l'une quelconque des revendications précédentes, **caractérisées en ce que** le composé acide contenant du phosphore (B1) est choisi dans le groupe constitué par les phosphates d'alkyle (B1a), les phosphonates (B1b) et les mono-O-alkyl-phosphonites (B1c).

7. Compositions de polyisocyanate selon l'une quelconque des revendications précédentes, **caractérisées en ce que** le composé acide contenant du phosphore (B1) présente une des formules générales (I) à (V) 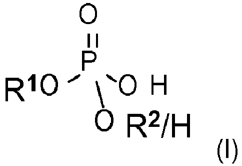 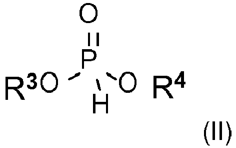 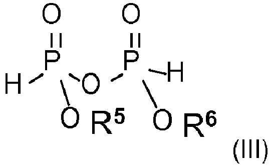 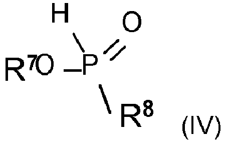 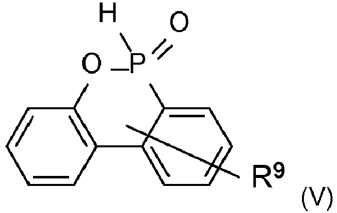 dans lesquelles R1 à R9 sont chacun indépendamment les uns des autres alkyle, de préférence alkyle en C4 à C8.

8. Compositions de polyisocyanate selon l'une quelconque des revendications précédentes, **caractérisées en ce que** l'amine trisubstituée à chaîne ouverte (B2) est une trialkylamine, de préférence une trialkylamine choisie dans le groupe constitué par la triéthylamine, la N,N-diméthylcyclohexylamine et la N,N-diméthyléthanolamine.

9. Compositions de polyisocyanate selon l'une quelconque des revendications précédentes, **caractérisées en ce que** l'amine trisubstituée à chaîne ouverte (B2) comprend un premier acide correspondant, dont la valeur de pKs en solution aqueuse est comprise entre 5 et 14 (25 °C), de manière particulièrement préférée entre 8,5 et 12, de manière tout particulièrement préférée entre 9,5 et 11,0.

10. Compositions de polyisocyanate selon l'une quelconque des revendications précédentes, **caractérisées en ce que** le composé acide contenant du phosphore (B1) et l'amine trisubstituée à chaîne ouverte (B2) sont utilisées en un rapport molaire de 1,2:0,8 à 0,5:1,5, de préférence de 1:1 à 0,8:1,2, de manière particulièrement préférée stœchiométrique.

11. Compositions de polyisocyanate selon l'une quelconque des revendications précédentes, **caractérisées en ce que** le composé (C) comprend exactement un groupe hydroxy phénolique par cycle aromatique et porte un groupe tert.-butyle éventuellement substitué dans au moins une, de préférence dans les deux positions ortho par rapport au groupe hydroxy phénolique.

12. Compositions de polyisocyanate selon l'une quelconque des revendications précédentes, **caractérisées en ce que** le composé (C) est choisi dans le groupe constitué par le 2,6-bis-tert.-butyl-4-méthyl-phénol (BHT), un ester alkylique de l'acide 3-[3,5-di-tert.-butyl-4-hydroxyphényl]-propionique, de préférence le tétrakis(3-(3,5-di-tert.-butyl-4-hydroxyphényl)propionate) de pentaérythrite, le 3,3',3",5,5',5"-hexa-tert.-butyl-α,α',α"-(mésitylène-2,4,6-triyl)tri-p-crésol, la 1,3,5-tris(3,5-di-tert.-butyl-4-hydroxybenzyl)-1,3,5-triazine-2,4,6(1H,3H,5H)-trione, le 3-(3,5-di-tert.-butyl-4-hydroxyphényl)-propionate d'octyle, le 3-(3,5-di-tert.-butyl-4-hydroxyphényl)-propionate d'alkyle en C7-C9 et le 3-(3,5-di-tert.-butyl-4-hydroxyphényl)-propionate d'octadécyle.

13. Compositions de polyisocyanate selon l'une quelconque des revendications précédentes, **caractérisées en ce que** l'antioxydant supplémentaire (D) est choisi dans le groupe constitué par les phosphites, les phosphonites, les phosphonates et les thioéthers.

14. Compositions de polyisocyanate selon l'une quelconque des revendications précédentes, **caractérisées en ce que** le composé métallique organique acide de Lewis (E) contient un métal, choisi dans le groupe constitué par l'étain, le zinc, le titane, le zirconium et le bismuth, ou des mélanges de tels composés.

15. Compositions de polyisocyanate selon l'une quelconque des revendications précédentes, **caractérisées en ce que** le solvant (F) est choisi dans le groupe constitué par les hydrocarbures aromatiques, les hydrocarbures (cyclo)aliphatiques, les cétones, les esters, les éthers, les éther-esters et les carbonates, notamment parmi les coupes de distillation d'hydrocarbures aromatiques contenant principalement des composés aromatiques en C₉ et C₁₀, et parmi les dialkylcétones.

16. Procédé de stabilisation de compositions de polyisocyanate, qui contiennent en plus de polyisocyanate (A) au moins un composé métallique organique acide de Lewis (E), qui peut accélérer la réaction de groupes isocyanate avec des groupes réactifs avec les isocyanates, **caractérisé en ce qu'**au moins un sel (B) est en outre ajouté à la composition de polyisocyanate en une quantité de 10 à 300 ppm en poids par rapport au polyisocyanate (A), constitué par un composé acide contenant du phosphore (B1) et une amine trisubstituée à chaîne ouverte (B2), ainsi qu'au moins un phénol à encombrement stérique (C), éventuellement au moins un antioxydant supplémentaire (D), au moins un solvant (F), et éventuellement d'autres additifs typiques des vernis (G).

17. Procédé de fabrication de vernis de polyuréthane, **caractérisé en ce qu'**une composition de polyisocyanate selon l'une quelconque des revendications 1 à 15 est mise en réaction avec au moins un liant, qui contient des groupes réactifs avec les isocyanates.

18. Procédé de fabrication de vernis de polyuréthane, **caractérisé en ce qu'**une composition de polyisocyanate selon l'une quelconque des revendications 1 à 15 est mise en réaction avec au moins un liant choisi dans le groupe constitué par les polyacrylate-polyols, les polyester-polyols, les polyéther-polyols, les polyuréthane-polyols, les polyurée-polyols, les polyétherols, les polycarbonates, les polyester-polyacrylate-polyols, les polyester-polyuréthane-polyols, les polyuréthane-polyacrylate-polyols, les résines alkydes modifiées par du polyuréthane, les polyester-polyuréthane-polyols modifiés par des acides gras, les copolymères avec des éthers allyliques et les copolymères ou polymères greffés des groupes de substances mentionnés.

19. Utilisation de compositions de polyisocyanate selon l'une quelconque des revendications 1 à 15 en tant que durcisseurs dans des agents de revêtement dans des couches de fond, des apprêts, des vernis de recouvrement pigmentés, des vernis de base et des vernis transparents dans le domaine de la finition, du vernissage de réparation automobile, de véhicules de grandes dimensions et de bois, de matières plastiques et OEM, dans des véhicules utilitaires, dans le domaine agricole et du bâtiment, ainsi qu'en tant que durcisseurs dans des adhésifs et des matériaux d'étanchéité.
